# EUROPEAN PATENT SPECIFICATION

(11) **EP 1 500 799 B1**
(45) Date of publication and mention of the grant of the patent: **24.10.2007**
(21) Application number: 03747537.3
(22) Date of filing: 09.04.2003
(51) Int. Cl.: F01N 3/02, F01N 3/28, B01J 35/04

(54) **HONEYCOMB FILTER FOR CLARIFYING EXHAUST GAS**
WABENFILTER ZUR REINIGUNG VON ABGAS
FILTRE EN NID D'ABEILLE POUR CLARIFIER DES GAZ D'ECHAPPEMENT

(30) Priority: 11.04.2002 JP 2002109717
(43) Date of publication of application: 26.01.2005
(73) Proprietor: IBIDEN CO., LTD., Ogaki-shi, Gifu-ken 503 (JP)
(72) Inventor: YAMADA, Keiji c/o IBIDEN CO., LTD. Ogakikita Kojo, Ibi-gun, Gifu 501-0695 (JP)
(74) Representative: Uchida, Kenji
(86) International application number: PCT/JP2003/004480
(87) International publication number: WO 2003/093658

(56) References cited:
- EP-A- 1 251 247
- JP-A- 9 173 866
- JP-A- 2001 073 743
- JP-U- 61 062 217
- US-A- 5 595 581

## Description

### CROSS REFERENCE TO RELATED APPLICATION

This application claims benefit of priority to Japanese Patent Application No. 2002-109717, filed on April 11, 2002.

### TECHNICAL FIELD

The present invention relates to a honeycomb filter for purifying exhaust gases that is used as a filter for removing particulates, for example contained in exhaust gases discharged from an internal combustion engine such as a diesel engine, for example.

### BACKGROUND ART

In recent years, particulates (fine particles), contained in exhaust gases that are discharged from internal combustion engines of vehicles, such as buses, trucks and the like, and construction machines, have raised serious problems as these particles are harmful to the environment and the human body.

For this reason, there have been proposed various ceramic filters that allow exhaust gases to pass through porous ceramics and collect particulates in the exhaust gases to purify the exhaust gases.

With respect to the ceramic filter of this type, normally, a columnar body in which a number of through holes are placed in parallel with one another in one direction with a partition wall interposed therebetween, is used, and the partition wall functions as a filter.

In other words, in the honeycomb filter, each of the through holes formed in the columnar body is sealed with a plug at either of ends of its exhaust gas inlet side or outlet side so as to form a so-called checkered pattern; thus, exhaust gases that have entered one through hole are discharged from another through hole after having always passed through a partition wall that separates the through holes so that, when the exhaust gases pass through the partition wall, the particulates are captured by the partition wall portion so that the exhaust gas are purified.

As such a purifying process for exhaust gases progresses, particulates are gradually accumulated on the partition wall portion that separates the through holes of the honeycomb filter to cause clogging and the subsequent interruption in gas permeability. For this reason, the above-mentioned honeycomb filter needs to be regularly subjected to a regenerating process in which the particulates that cause clogging are burned and removed by using a heating means such as a heater or the like to regenerate the filter.

Conventionally, in the honeycomb filter of this type, it has been considered that a plug to be injected in the end of each through hole should have a compact structure so as to prevent exhaust gases entered the through holes from simply passing through the honeycomb filter and to securely make the exhaust gases pass through the partition wall, (for example, see JP Kokai Sho 59-225718).

In the conventional honeycomb filter of this type, however, the above-mentioned columnar body is made of porous ceramics, and the coefficient of thermal expansion of this columnar body and the coefficient of thermal expansion of the plug having the compact structure are different from each other.

For this reason, in the honeycomb filter of this type, a great thermal stress is exerted between a plug and a portion of the partition wall contacting the plug due to a difference between the coefficient of thermal expansion of the columnar body and the coefficient of thermal expansion of the plug during a firing process upon manufacturing, with the result that a gap tends to occur between a plug and a partition wall and cracks tend to occur in the plug and a portion of the partition wall contacting the plug.

In order to solve this problem, a filter has been proposed in which by adjusting the coefficients of thermal expansion between the honeycomb filter and the plug, the occurrence of cracks is prevented during the manufacturing processes (see JP Kokai Sho 57-42316).

However, even in the case where no gap occurs between the plug and the partition wall and when no crack occurs in the plug and the portion of the partition wall contacting the plug upon manufacturing a honeycomb filter, when exhaust gas purifying processes are carried out by using such a honeycomb filter, thermal stresses, caused by the difference between the coefficient of thermal expansion of this columnar body and the coefficient of thermal expansion of the plug, are accumulated between the plug of the honeycomb filter and the portion of the partition wall contacting the plug through thermal cycles that are repeatedly applied due to high-temperature exhaust gases and heating applied during regenerating processes and the like of the honeycomb filter; thus a gap tends to occur between the plug and the partition wall and cracks tend to occur in the plug and the portion of the partition wall contacting the plug.

In recent years, another idea has been proposed in which, in place of the above-mentioned regenerating process of the honeycomb filter using the heating means such as a heater or the like, by letting the honeycomb filter support an oxidizing catalyst in its pores, hydrocarbon contained in exhaust gases that flow into the honeycomb filter is made to react with the oxidizing catalyst so that heat generated through this reaction is utilized for the regenerating process of the honeycomb filter. In the honeycomb filter that carries out the regenerating process in this manner, it is necessary to increase the porosity thereof, because clogging of pores tends to occur due to particulates since the oxidizing catalyst is supported on the inside of each pore of the honeycomb filter, and because the oxidizing catalyst needs to be supported as much as possible in order to generate a large amount of heat.

In such a honeycomb filter with high porosity, however, the difference between the coefficient of thermal expansion of the columnar body and the coefficient of thermal expansion of the plug having a compact structure becomes greater, with the result that a gap tends to occur between the plug and the partition wall and cracks tend to occur in the plug and the portion of the partition wall contacting the plug due to thermal stresses occurring between the plug and the partition wall, which are caused by the firing process upon manufacturing and high-temperature exhaust gases during operation, as described above.

In addition, in order to allow such a honeycomb filter with high porosity to support a catalyst, normally, a method is used in which: the honeycomb filter is coated with γ-alumina or the like having a high specific surface area to form a catalyst supporting film and noble metal which works as the catalyst is dispersed and supported on the catalyst supporting film; however, in this method, the catalyst supporting film tends to be formed so as to intrude between the plug and the portion of the partition wall contacting the plug, and cracks or the like tend to occur due to thermal stresses caused by the difference between the coefficients of expansion of these materials.

Conventionally, a honeycomb filter in which a plug is allowed to have gas permeability so as to easily separate particulates collected from exhaust gases upon back-washing (see JP Kokai Hei 7-332064); and a honeycomb filter in which the porosity of a plug is limited so as to improve the purifying performance (see JP Kokai 2003-3823): have been proposed. However, these honeycomb filters have not been prepared by taking the above-mentioned problems into consideration, and the objects of these are completely different from that of the present invention; therefore, the technical premises thereof are completely different from that of the present invention.

### SUMMARY OF THE INVENTION

The present invention is made to solve the above-mentioned problems, and its object is to provide a honeycomb filter for purifying exhaust gases that is free from a gap formed between a plug and a partition wall and cracks generated in the plug and a portion of the partition wall contacting the plug, and is superior in durability.

The present invention provides a honeycomb filter for purifying exhaust gases which has a structure in which:
a columnar body made of porous ceramic comprises a number of through holes, said through holes being placed in parallel with one another in the length direction with a wall portion interposed therebetween;
predetermined through holes of said through holes are filled with plugs at one end of said columnar body, while the through holes that have not been filled with said plugs at said one end are filled with plugs at the other end of said columnar body; and
a part or all of said wall portion functions as a filter for collecting particulates
wherein the porosity of the columnar body is in a range from 20 to 80%, and the porosity of the plug is 90% or less and is also set to 0.15 to 4.0 times as much as the porosity of the columnar body.

Moreover, in the case where a catalyst is supported on the honeycomb filter for purifying exhaust gases of the present invention, the porosity of the columnar body and the plug is desirably measured after a catalyst supporting film has been formed on the honeycomb filter for purifying exhaust gases of the present invention.

### BRIEF DESCRIPTION OF THE DRAWINGS

Fig. 1(a) is a perspective view that schematically shows one example of a honeycomb filter for purifying exhaust gases of the present invention, and Fig. 1(b) is a longitudinal cross-sectional view taken along line A-A of Fig. 1(a).
Fig. 2 is a perspective view that schematically shows another example of the honeycomb filter for purifying exhaust gases of the present invention.
Fig. 3 (a) is a perspective view that schematically shows a porous ceramic member to be used for the honeycomb filter for purifying exhaust gases of the present invention shown in Fig. 2, and Fig. 3(b) is a longitudinal cross-sectional view taken along line B-B of Fig. 3(a).
Fig. 4(a) is a cross-sectional view that schematically shows a mouth sealing treatment to be carried out upon manufacturing the honeycomb filter for purifying exhaust gases of the present invention, and Fig. 4(b) is a partial enlarged cross-sectional view thereof.
Fig. 5 is a side view that schematically shows manufacturing processes of the honeycomb filter of the present invention.
Fig. 6 is a cross-sectional view that schematically shows one example of an exhaust gas purifying device in which the honeycomb filter for purifying exhaust gases of the present invention is used.
Fig. 7 (a) is a perspective view that schematically shows one example of a metal shell, and Fig. 7(b) is a perspective view that schematically shows one example of another metal shell.

### EXPLANATION OF SYMBOLS

- 10, 20: honeycomb filter
- 11, 31: through hole
- 12, 32: plug
- 13: wall portion
- 24: sealing material layer
- 25: ceramic block
- 26: sealing material layer
- 30: porous ceramic member
- 33: partition wall

### DETAILED DISCLOSURE OF THE INVENTION

The present invention provides a honeycomb filter for purifying exhaust gases which has a structure, as defined in claim 1.

Moreover, in the case where a catalyst is supported on the honeycomb filter for purifying exhaust gases of the present invention, the porosity of each of the columnar body and the plug is desirably measured after a catalyst supporting film has been formed on the honeycomb filter for purifying exhaust gases of the present invention.

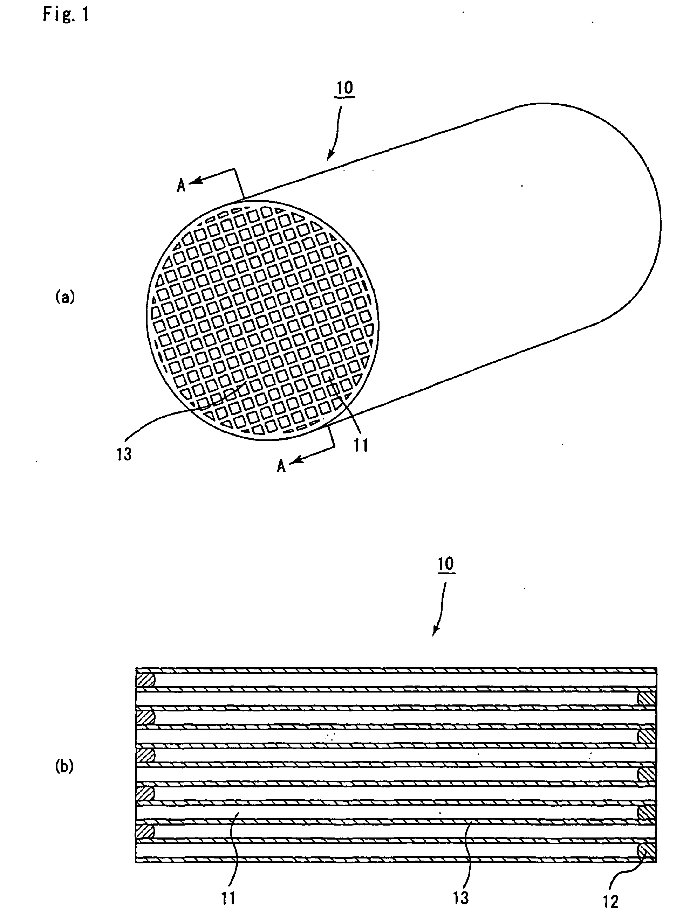

Fig. 1 (a) is a perspective view that schematically shows one example of a honeycomb filter for purifying exhaust gases of the present invention (hereinafter, simply referred to as the honeycomb filter of the present invention), and Fig. 1(b) is a longitudinal cross-sectional view taken along line A-A of Fig. 1(a).

As shown in Fig. 1 (a), the honeycomb filter 10 of the present invention has a columnar body constituted by a single porous ceramic sintered body in which a number of through holes 11 are placed in parallel with one another in the length direction with wall portion 13 interposed therebetween, and in this columnar body, a plug 12 is injected to one of the ends or the other end of each through hole 11 so that all the wall portion 13 function as filters for collecting particulates.

In other words, as shown in Fig. 1 (b), each of the through holes 11 formed in the honeycomb filter 10 has either of its ends on the inlet side or outlet side of exhaust gases sealed with a plug 12; thus, exhaust gases that have entered one of the through holes 11 are made to flow out of another through hole 11 after always passing through the wall portion 13 that separates the corresponding through holes 11.

Consequently, particulates contained in the exhaust gases that have entered the honeycomb filter 10 of the present invention are captured by the wall portion 13 when passing through the wall portion 13 so that the exhaust gases are purified.

The honeycomb filter 10 having the above-mentioned arrangement is placed in an exhaust gas purifying device that is installed in an exhaust passage in an internal combustion engine.

Here, the exhaust gas purifying device will be described later.

In the honeycomb filter 10 of the present invention, the columnar body is a columnar member made of porous ceramics, which has a number of through holes 11 that are placed in parallel with one another in the length direction with partition wall 13 being interposed therebetween, and the porosity of the columnar porous ceramic members is desirably set to 20 to 80%. When the porosity of the columnar body is less than 20%, the honeycomb filter 10 is more likely to generate clogging, while the porosity of the columnar body exceeding 80% causes degradation in the strength of the honeycomb filter 10, with the result that it might be easily broken.

Here, the above-mentioned porosity can be measured through known methods such as a mercury press-in method, Archimedes method, ameasuringmethodusinga scanningelectronicmicroscope (SEM), and the like.

With respect to the size of the columnar body, not particularly limited, it is appropriately determined by taking the size of an exhaust gas passage of the internal combustion engine and the like to be used into consideration. Moreover, with respect to the shape thereof, not particularly limited as long as it is a column shape, for example, any desired shape such as a cylinder shape, an elliptical column shape, a rectangular column shape, for example, may be used, and in general, as shown in Fig. 1, those having a cylinder shape are often used.

With respect to the porous ceramics constituting the columnar body, not particularly limited, examples thereof include: oxide ceramics such as cordierite, alumina, silica, mullite, for example; carbide ceramics such as silicon carbide, zirconium carbide, titanium carbide, tantalum carbide, tungsten carbide, for example, and nitride ceramics such as aluminum nitride, silicon nitride, boron nitride, titanium nitride, for example. However, normally, oxide ceramics such as cordierite, for example, are utilized. This is because :these materials make it possible to carry out the manufacturing process at low costs, have a comparatively small coefficient of thermal expansion and are less likely to be oxidized during use. Further, silicon-containing ceramics made by blending metallic silicon in the above-mentioned ceramics, and ceramics bonded by silicon and silicate compound may also be used.

The average pore diameter of the columnar body is desirably set in a range from 5 to 100 µm. The average pore diameter of less than 5 µm tends to cause clogging of particulates easily. In contrast, the average pore diameter exceeding 100 µm tends to cause particulates to pass through the pores, with the result that the particulates cannot be collected, making the columnar body unable to function as a filter.

Here, the honeycomb filter 10 of the present invention has a structure in which a plug 12 is injected to each through hole 11 at one of the ends of the columnar body or the other end thereof, and the porosity of this plug 12 is set to 90% or less. The porosity of the plug 12 exceeding 90% causes degradation in the strength of the plug 12, with the result that the plug 12 might be easily broken due to high-temperature exhaust gases that flow into the honeycomb filer 10 and a thermal impact and the like caused by thermal cycles and the like during regenerating processes. Moreover, even when the plug 12 is not broken, particulates tend to pass through the plug 12, making the columnar body unable to sufficiently function as an exhaust gas purifying filter.

With respect to the multiplying ratio of the porosity of the plug 12 to the porosity of the columnar body, the lower limit thereof is set to 0.15 times, and the upper limit thereof is set to 4.0 times.

When the lower limit of the multiplying ratio of the porosity of the plug 12 to the porosity of the columnar body is less than 0.15 times, the difference between the coefficient of thermal expansion of the columnar body and the coefficient of thermal expansion of the plug 12 becomes too large, with the result that during a firing process upon manufacturing, a gap tends to occur between the plug 12 and the wall portion 13 and cracks tend to occur in the plug 12 and a portion of the wall portion 13 that contacts the plug 12 due to the difference in the coefficients of thermal expansion. In contrast, when the upper limit of the multiplying ratio of the porosity of the plug 12 to the porosity of the columnar body exceeds 4.0 times, the difference between the coefficient of thermal expansion of the columnar body and the coefficient of thermal expansion of the plug 12 becomes too large in this case also, with the result that during a firing process upon manufacturing, a gap tends to occur between the plug 12 and the wall portion 13 and cracks tend to occur in the plug 12 and a portion of the wall portion 13 that contacts the plug 12 due to the difference in the coefficients of thermal expansion; presumably causing a reduction in the strength.

Here, the lower limit of the multiplying ratio of the porosity of the plug 12 to the porosity of the columnar body is desirably set to 0.25 times, and the upper limit thereof is desirably set to 1.5 times.

In the case where the lower limit of the multiplying ratio of the porosity of the plug 12 to the porosity of the columnar body is less than 0.25 times, even if the difference between the coefficient of thermal expansion of the columnar body and the coefficient of thermal expansion of the plug 12 is comparatively large with neither the gap nor cracks occurring during a firing process upon manufacturing, a gap tend to occur between the plug 12 and the wall portion 13 and cracks tend to occur in the plug 12 and a portion of the wall portion 13 that contacts the plug 12 due to thermal cycles repeatedly applied thereto by high-temperature exhaust gases during operation and heating processes at the time of the regenerating process, causing a reduction in the strength. Moreover, in the case where a catalyst supporting film is formed on the honeycomb filter of the present invention, the catalyst supporting film is sometimes formed between the plug 12 and a portion of the wall portion 13 that contacts the plug 12 so as to intrude therebetween; consequently, in this case, cracks also occur due to a thermal stress caused by the difference between the coefficients of thermal expansion of the catalyst supporting film and the plug 12 as well as a portion of the wall portion 13 that contacts the plug 12, resulting in a reduction in strength.

In contrast, in the case where the upper limit of the multiplying ratio of the porosity of the plug 12 to the porosity of the columnar body exceeds 1.5 times, even if the difference between the coefficient of thermal expansion of the columnar body and the coefficient of thermal expansion of the plug 12 is comparatively large with neither the gap nor cracks occurring during a firing process upon manufacturing, thermal stresses, caused by thermal cycles repeatedly applied thereto by high-temperature exhaust gases and heating processes at the time of the regenerating process, are accumulated in the plug 12 and a portion of the wall portion 13 that contacts the plug 12, causing a gap between the plug 12 and the portion of the wall portion 13 that contacts the plug 12, and a crack in the plug 12 and the portion of the wall portion 13 that contacts the plug 12; presumably, these cause a reduction in the strength. Moreover, when the columnar body is used repeatedly for a long time, the high-temperature exhaust gases are concentrated on the plug 12 having a higher porosity, with the result that the plug 12 is more likely to receive a thermal impact and tends to be broken. Moreover, in the case where a catalyst supporting film is formed at the honeycomb filter of the present invention, the catalyst supporting film tends to be formed between the plug 12 and a portion of the wall portion 13 that contacts the plug 12 so as to intrude therebetween; consequently, in this case, cracks also occur due to a thermal stress caused by the difference between the coefficients of thermal expansion of the catalyst supporting film and the plug 12 as well as a portion of the wall portion 13 that contacts the plug 12.

In the case where a catalyst supporting film of 1 g/L or more is formed at the honeycomb filter of the present invention, the multiplying ratio of the porosity of the plug 12 is desirably set in a range from 0.3 to 1.2 times as much as the porosity of the columnar body.

Here, the upper limit of the porosity of the plug 12 is 90% as described above, and in the honeycomb filter 10 of the present invention, since the lower limit of the porosity of the columnar body is 20%, and since the lower limit of the multiplying ratio of the porosity of the plug 12 to the porosity of the columnar body is 0.15 times, the lower limit of the porosity of the plug 12 corresponds to 3%.

In the case where the porosity of the plug 12 is less than 3%, the bonding strength between the plug 12 and the wall portion 13 is lowered; therefore, when an exhaust gas purifying process is carried out by using the honeycomb filter of this type, gaps and cracks occur between the plug and the wall portion due to a thermal impact caused by high-temperature exhaust gases and heating processes and the like at the time of the regenerating process, with the result that the plug 12 sometimes comes off. The reason for this is explained as follows: in an attempt to reduce the porosity of the plug of the honeycomb filter to less than 3%, the viscosity of filler paste to be used for forming the layer of the plug becomes higher, making the paste very difficult to flow. Consequently, it becomes very difficult to inject the plug having such high viscosity to the end of a predetermined through hole of a ceramic formed body which constitutes the columnar body without a gap, with a sufficient width from the end face of the ceramic formed body. Therefore, the contact area between the plug and the wall portion of the honeycomb filter to be manufactured becomes very small, resulting in a reduction in the bonding strength between the plug and the wall portion.

Additionally, the manufacturing method for the above-mentioned honeycomb filter will be explained later in detail.

The above-mentioned plug 12 is desirably made of porous ceramics.

In the honeycomb filter 10 of the present invention, the columnar body to which the plug 12 is injected is made of porous ceramics; therefore, by forming the plug 12 using the same porous ceramics as the columnar body, the bonding strength between the two members becomes higher and by adjusting the porosity of the plug 12 so as to satisfy the above-mentioned conditions, the coefficient of thermal expansion of the columnar body is allowed to match with the coefficient of thermal expansion of the plug 12 so that it becomes possible to prevent occurrence of a gap between the plug 12 and the wall portion 13 and occurrence of cracks in the plug 12 and a portion of the wall portion 13 that contacts the plug 12, due to a thermal stress upon manufacturing as well as during operations.

In the case where the plug 12 is made of porous ceramics, not particularly limited, for example, the same material as the ceramic material constituting the above-mentioned columnar body may be used.

In the honeycomb filter of the present invention, the columnar body desirably has a structure in which a plurality of rectangular columnar porous ceramic members; each having a plurality of through holes that are placed in parallel with one another in the length direction with a partition wall interposed therebetween, are combined with one another through sealing material layers. In this structure, since the columnar body is divided into the porous ceramic members, it is possible to reduce a thermal stress that is exerted on the porous ceramic members during the operation, and consequently to make the honeycomb filter of the present invention superior in heat resistance. Moreover, it is also possible to freely adjust the size thereof by increasing or reducing the number of the porous ceramic members.

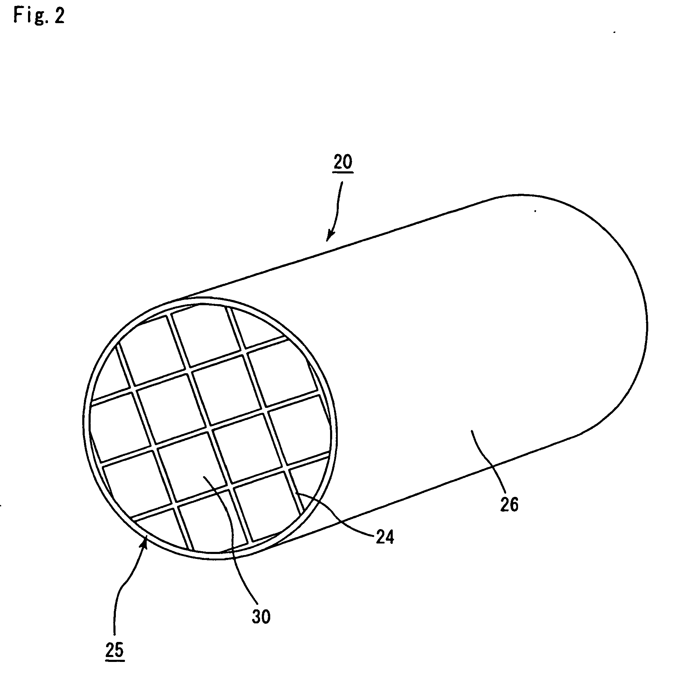

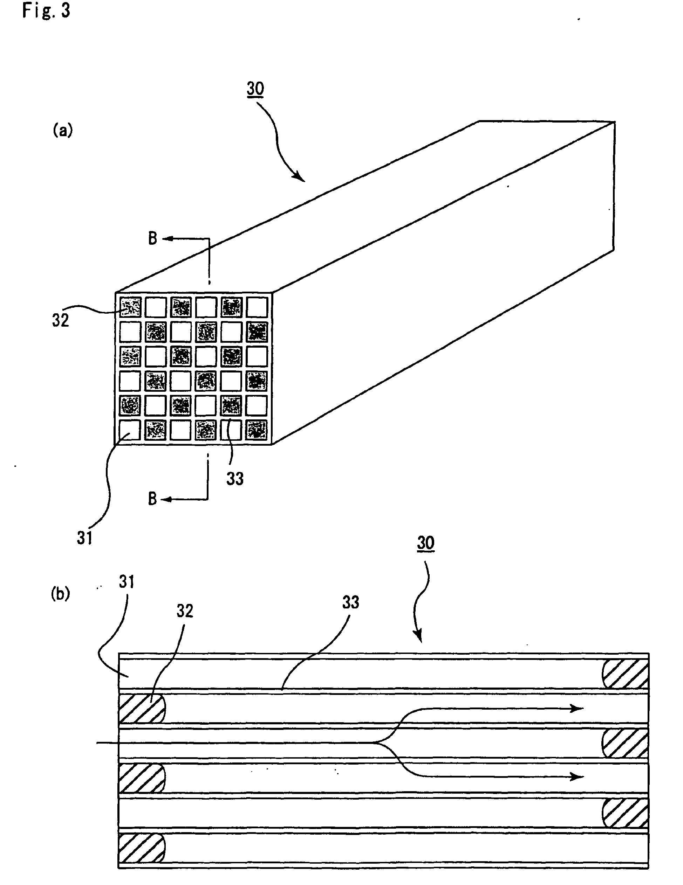

Fig. 2 is a perspective view that schematically shows another example of the honeycomb filter for purifying exhaust gases of the present invention, and Fig. 3 (a) is a perspective view that schematically shows a porous ceramic member to be used for the honeycomb filter for purifying exhaust gases of the present invention shown in Fig. 2, and Fig. 3 (b) is a longitudinal cross-sectional view taken along line B-B of Fig. 3(a).

As shown in Fig. 2, in a honeycomb filter 20 of the present invention, a plurality of porous ceramic members 30 are combined with one another through sealing material layers 24 to constitute a ceramic block 25, and a sealing material layer 26 is also formed on the periphery of the ceramic block 25. Moreover, as shown in Fig. 3, each of the porous ceramic members 30 has a structure in which a number of through holes 31 are arranged in parallel with one another in the length direction so that the partition wall 33 that separates the through holes 31 from each other function as filters.

In other words, as shown in Fig. 3(b), each of the through holes 31 formed in the porous ceramic member 30 has either of its ends on the inlet side or outlet side of exhaust gases sealed with a plug 32; thus, exhaust gases that have entered one of the through holes 31 are allowed to flow out of another through hole 31 after having always passed through the partition wall 33 that separates the corresponding through holes 31.

Moreover, the sealing material layer 26, which is formed on the periphery of the ceramic block 25, is placed so as to prevent exhaust gases from leaking through the peripheral portion of each ceramic block 25 when the honeycomb filter 20 is installed in an exhaust passage of an internal combustion engine.

Here, in Fig. 3 (b), arrows indicate flows of exhaust gases.

The honeycomb filter 20 having the above-mentioned structure is placed in an exhaust gas purifying device that is installed in the exhaust passage in an internal combustion engine so that particulates in the exhaust gases discharged from the internal combustion engine are captured by the partition wall 33 when passing through the honeycomb filter 20; thus, the exhaust gases are purified.

Since the honeycomb filter 20 of this type has superior heat resistance and enables easy regenerating processes and the like, it has been applied to various large-size vehicles and vehicles with diesel engines.

In the honeycomb filter 20 of the present invention having the above-mentioned structure, the porosity of the columnar body (the member corresponding to the ceramic block 25 from which the plug 32 is omitted) is set in a range from 20 to 80%, and the porosity of the plug 32 is 90% or less, and in this structure, with respect to the multiplying ratio of the porosity of the plug 32 to the porosity of the columnar body, the lower limit is 0.15 times, and the upper limit is 4.0 times. Thus, the structure is the same as the honeycomb filter 10 explained by reference to Fig. 1.

Moreover, in the same manner as the plug 12 explained in the honeycomb filter 10 of the present invention, with respect to the multiplying ratio of the porosity of the plug 32 to the porosity of the columnar body, the lower limit is desirably set to 0.25 times, and the upper limit is desirably set to 1.5 times, with the lower limit of the porosity of the plug 32 corresponding to 3%, and the plug 32 is desirably made of porous ceramics.

With respect to the material for the porous ceramic member 30, not particularly limited, for example, the same materials as the ceramic material constituting the columnar body of the honeycomb filter 10 of the present invention may be used. Among these, silicon carbide, whichhasgreatheatresistance, superior mechanical properties and great thermal conductivity, is desirably used.

With respect to the particle size of ceramic particles to be used upon manufacturing the porous ceramic members 30, although not particularly limited, those which are less likely to shrink in the succeeding firing process are desirably used, and for example, those particles, prepared by combining 100 parts by weight of particles having an average particle size from 0.3 to 50 µm with 5 to 65 parts by weight of particles having an average particle size from 0.1 to 1.0 µm, are desirably used. By mixing ceramic powders having the above-mentioned respective particle sizes at the above-mentioned blending ratio, it is possible to provide a porous ceramic member 30.

In the honeycomb filter 20 of the present invention, a plurality of porous ceramic members 30 of this type are combined with one another through sealing material layers 24 to constitute a ceramic block 25, and a sealing material layer 26 is also formed on the periphery of the ceramic block 25.

In other words, in the honeycomb filter 20 of the present invention, the sealing material layer is formed between the porous ceramic members 30 as well as on the periphery of the ceramic block 25, and the sealing material layer (sealing material layer 24) formed between the porous ceramic members 30 functions as an adhesive layer for bonding the porous ceramic members 30 to one another, while the sealing material layer (sealing material layer 26) formed on the periphery of the ceramic block 25 functions as a sealing member for preventing leak of exhaust gases from the periphery of the ceramic block 25, when the honeycomb filter 20 of the present invention is installed in the exhaust passage of an internal combustion engine.

With respect to the material forming the sealing material layer (sealing material layer 24 and sealing material layer 26), not particularly limited, for example, a material composed of an inorganic binder, an organic binder, inorganic fibers and inorganic particles may be used.

As described above, in the honeycomb filter 20 of the present invention, the sealing material layer is formed between the porous ceramic members 30 as well as on the periphery of the ceramic block 25; and these sealing material layers (sealing material layer 24 and sealing material layer 26) may be made of the same material or different materials. In the case where the same material is used for the sealing material layers, the blending ratio of the material may be the same or different.

With respect to the inorganic binder, for example, silica sol, alumina sol, for example, may be used. Each of these may be used alone or two or more kinds of these may be used in combination. Among the inorganic binders, silica sol is more desirably used.

With respect to the organic binder, examples thereof include polyvinyl alcohol, methyl cellulose, ethyl cellulose, carboxymethyl cellulose, for example. Each of these may be used alone or two or more kinds of these may be used in combination. Among the organic binders, carboxymethyl cellulose is more desirably used.

With respect to the inorganic fibers, examples thereof include ceramic fibers, such as silica-alumina, mullite, alumina, silica, for example. Each of these may be used alone or two or more kinds of these may be used in combination. Among the inorganic fibers, silica-alumina fibers are more desirably used.

With respect to the inorganic particles, examples thereof include carbides and nitrides, and specific examples include inorganic powder or whiskers of silicon carbide, silicon nitride and boron nitride. Each of these may be used alone, or two or more kinds of these may be used in combination. Among the inorganic fine particles, silicon carbide having superior thermal conductivity is desirably used.

In the honeycomb filter 20 shown in Fig. 2, the ceramic block 25 is formed into a cylinder shape; however, not limited to the cylinder shape, the ceramic block of the honeycomb filter of the present invention may have any desired shape such as an elliptical column shape, a rectangular column shape and the like.

Not particularly limited, the thickness of the sealing material layer 26 formed on the periphery of the ceramic block 25 is desirably set in a range of 0.3 to 1.0 mm. The thickness of less than 0.3 mm tends to cause leak of exhaust gases from the peripheral portion of the ceramic block 25, and, in contrast, the thickness exceeding 1.0 mm tends to cause degradation in economical efficiency, although it can sufficiently prevent leak of exhaust gases.

Moreover, a catalyst is desirably supported on the honeycomb filter of the present invention. When such a catalyst is supported thereon, the honeycomb filter of the present invention functions as a filter capable of collecting particulates in exhaust gases and, also, functions as a catalyst supportingmember for purifying CO, HC, NOx, for example, contained in exhaust gases.

With respect to the catalyst, not particularly limited as long as it can purify CO, HC, NOx, for example, in exhaust gases, examples thereof include noble metals such as platinum, palladium, rhodium, for example. In addition to the noble metals, an element such as an alkali metal (Group 1 in Element Periodic Table), an alkali earth metal (Group 2 in Element Periodic Table), a rare-earth element (Group 3 in Element Periodic Table), a transition metal element, for example, may be added thereto.

Moreover, upon applying the catalyst onto the honeycomb filter of the present invention, it is preferable to apply the catalyst, after the surface thereof has been preliminarily coated with a catalyst supporting film. This arrangement makes it possible to increase the specific surface area, to increase the degree of dispersion of the catalyst, and consequently to increase the reactive portion of the catalyst. Here, since the catalystsupportingfilm prevents sinteringof the catalystmetal, the heat resistance of the catalyst can be improved. In addition, the pressure loss is also lowered. Here, in the honeycomb filter of the present invention, the porosity of the columnar body is set in a range from 20 to 80%, and the porosity of the plug is set to 90% or less, with the rate thereof to the porosity of the columnar body being set in a range from 0.15 times to 4.0 times; therefore, even when the catalyst supporting film is formed, the honeycomb filer is free from problems such as cracks caused by the coefficient of thermal expansion of the catalyst supporting film.

With respect to the catalyst supporting film, for example, a film made of a material such as alumina, zirconia, titania, silica, for example, may be used.

With respect to the method for forming the catalyst supporting film, not particularly limited, upon forming, for example, a catalyst supporting film made of alumina, a method in which the filter is immersed in a slurry solution prepared by dispersing γ-Al₂O₃ powder in a solvent and a sol-gel method in which after a solution of alumina sol has been applied to the partition wall, this is gelled to form an alumina film may be used.

Moreover, the plug may be selectively impregnated with a solution for forming a catalyst supporting film through an injection method or a masking method so that the amount of formation of the catalyst supporting film in the columnar body is made different from the amount of formation of the catalyst supporting film in the plug.

The honeycomb filter of the present invention in which the above-mentioned catalyst is supported functions as a gas purifying device in the same manner as the conventionally known DPFs (Diesel Particulate Filters) with catalyst. Therefore, in the following description, the detailed explanation of the case in which the honeycomb filter of the present invention also serves as a catalyst supporting member is omitted.

As described above, in the honeycomb filter of the present invention, the porosity of the columnar body constituting the honeycomb filter is set in a range from 20 to 80%, and the porosity of the plug is set to 90% or less, with the rate thereof to the porosity of the columnar body being set in a range from 0.15 times to 4.0 times. Therefore, the porosity of the columnar body constituting the honeycomb filter of the present invention is not so different from the porosity of the plug. Consequently, the difference between the coefficient of thermal expansion of the columnar body and the coefficient of thermal expansion of the plug is made smaller so that it becomes possible to prevent a gap from occurring between the plug and the wall portion and also to prevent cracks from occurring in the plug and a portion of the wall portion that contacts the plug due to the difference between the coefficients of thermal expansion, during a firing process upon manufacturing. Moreover, even when the honeycomb filter of the present invention is used so that thermal cycles are repeatedly applied thereto due to high-temperature exhaust gases and heat applied at the time of the regenerating process, the difference between the coefficient of thermal expansion of the columnar body and the coefficient of thermal expansion of the plug is not so big; therefore, it becomes possible to prevent a gap from occurring between the plug and the partition wall and also to prevent cracks from occurring in the plug and the portion of the partition wall contacting the plug due to accumulated thermal stresses and the like caused by thermal cycles, thereby making the honeycomb filter of the present invention superior in the durability.

Next, the following description will be given of one example of a manufacturing method for the above-mentioned honeycomb filter of the present invention.

In the case where the honeycomb filter of the present invention has a structure, as shown in Fig. 1, in which the entire structure is constituted by a single sintered body, first, an extrusion-molding process is carried out by using the material paste mainly composed of the above-mentioned ceramics so that a ceramic formed body having almost the same shape as shown by a honeycomb filter 10 of Fig. 1 is manufactured.

With respect to the material paste, not particularly limited, any material paste may be used as long as the porosity of the columnar body after the manufacturing process is set in a range from 20 to 80%, and, for example, a material paste, prepared by adding a binder and a dispersant solution to powder made of the above-mentioned ceramics, may be used.

With respect to the above-mentioned binder, not particularly limited, examples thereof include methylcellulose, carboxy methylcellulose, hydroxy ethylcellulose, polyethylene glycol, phenol resins, epoxy resins, for example.

Normally, the blend ratio of the above-mentioned binder is desirably set to 1 to 10 parts by weight to 100 parts by weight of ceramic powder.

With respect to the above-mentioned dispersant solution, not particularly limited, for example, an organic solvent such as benzene, for example, alcohol such as methanol, for example, water and the like may be used.

An appropriate amount of the above-mentioned dispersant solution is blended so that the viscosity of the material paste is set in a predetermined range.

These ceramic powder, binder and dispersant solution are mixed by an attritor, for example, and sufficiently kneaded by a kneader, for example, and then extrusion-molded so that the above-mentioned ceramic formed body is formed.

Moreover, a molding auxiliary may be added to the above-mentioned material paste, based on necessity.

With respect to the molding auxiliary, not particularly limited, examples thereof include: ethylene glycol, dextrin, fatty acid soap, polyalcohol, for example.

Furthermore, a pore forming agent, such as balloons that are fine hollow spheres composed of oxide-based ceramics, spherical acrylic particles and graphite, may be added to the above-mentioned material paste, based on necessity.

With respect to the above-mentioned balloons, not particularly limited, for example, alumina balloons, glass micro-balloons, shirasu balloons, fly ash balloons (FAballoons) and mullite balloons may be used. Among these, fly ash balloons are more desirably used.

Next, the above-mentioned ceramic formed body is dried by using a dryer, such as a microwave dryer, a hot-air dryer, a dielectric dryer, a decompression dryer, a vacuum dryer, a freeze dryer, for example, and predetermined through holes are then filled with a filler paste that is going to be a plug; thereafter, the above-mentioned through holes are subjected to mouth sealing processes so as to be sealed.

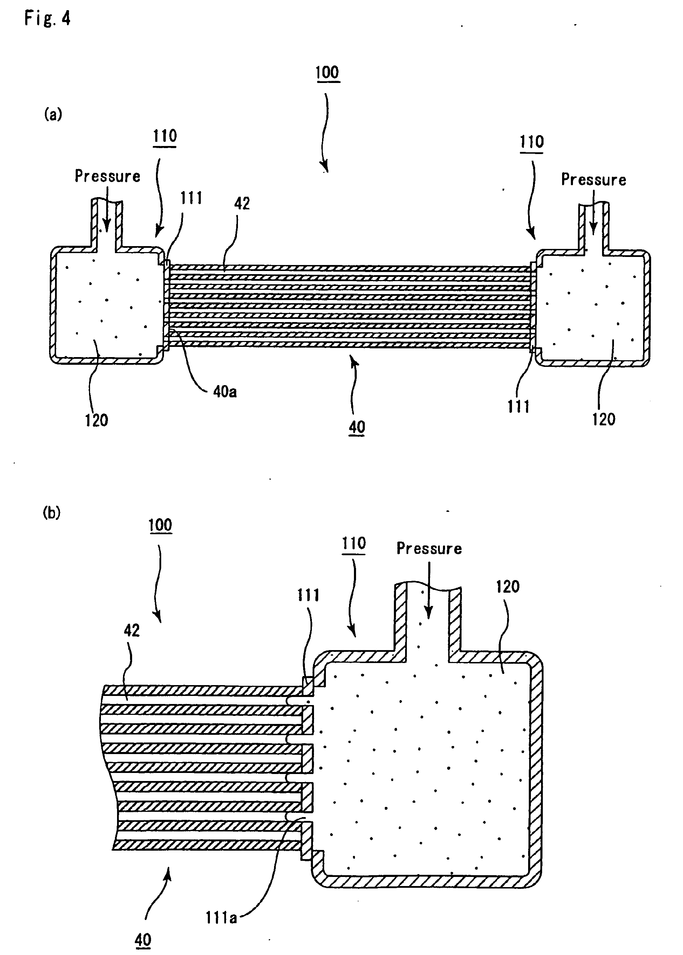

Fig. 4(a) is a cross-sectional view that schematically shows an example of a mouth sealing device to be used in the above-mentioned mouth sealing process, and Fig. 4 (b) is a partial enlarged cross-sectional view that shows one portion thereof.

As shown in Fig. 4, a mouth sealing device 100 to be used in the mouth sealing process has a structure in which: a pair of tightly-closed filler discharging tanks 110, each of which has a mask 111 that has an opening section 111a having a predetermined pattern and is placed on its side face, are filled with filler paste 120 and arranged so that the two side faces, each having the mask 111, are aligned face to face with each other.

In the case where the mouth sealing process of the ceramic dried body is carried out by using the mouth sealing device 100 of this type, first, a ceramic dried body 40 is secured between the filler discharging tanks 110 so that the end face 40a of the ceramic dried body 40 is made in contact with the mask 111 formed on the side face of each of the filler discharging tanks 110.

At this time, the opening section 111a of the mask 111 and the through hole 42 of the ceramic dried body 40 are positioned so that they are aligned face to face with each other.

Next, a predetermined pressure is applied to the filler discharging tank 110 by using, for example, a pump such as a mono-pump or the like, so that the filler paste 120 is discharged from the opening section 111a of the mask 111; thus, by injecting the filler paste 120 to the end of the through hole 42 of the ceramic dried body 40, predetermined through holes 42 of the ceramic dried body 40 are filled with the filler paste 120 that forms the plugs.

Here, the mouth sealing device to be used in the above-mentioned mouth sealing process is not limited to the above-mentioned mouth sealing device 100, for example, another system may be used in which: an open-type filler discharging tank in which a stirring member is installed is prepared, and by moving the stirring member up and down, the filler paste, filled in the filler discharging tank, is allowed to flow so that the filler paste is injected.

With respect to the filler paste, not particularly limited, any filler paste may be used as long as the resulting plug manufactured through post processes is allowed to have a porosity of 90% or less that corresponds to 0.15 to 4.0 times as much as the porosity of the columnar body to be manufactured by sintering the ceramic dried body 40; and, for example, the same material as the above-mentioned material paste may be used, and a material, which is prepared by adding a lubricant, a solvent, a dispersant and a binder to the ceramic powder that is used for the material paste, is desirably used. This material makes it possible to prevent the ceramic particles in the filler paste from precipitating in the middle of the mouth sealing process. Additionally, when the above-mentioned filler paste fails to satisfy the above-mentioned conditions, the honeycomb filter, manufactured through the post processes, tends to have problems, such as a reduction in the bonding strength between the plug and the wall portion, a reduction in the strength of the plug, occurrence of a gap and cracks between the plug and the wall portion and occurrence of cracks in the plug and a portion of the wall portion that contacts the plug, as described in the honeycomb filter of the present invention.

With respect to the filler paste of this type, the ceramic powder is desirably prepared by adding a small amount of fine powder having a smaller average particle size to coarse powder having a greater average particle size. This arrangement allows the fine powder to bond the ceramic particles to each other. Here, the lower limit of the average particle size of the coarse powder is desirably set to 5 µm, more desirably 10 µm. Moreover, the upper limit of the average particle size of the coarse powder is desirably set to 100 µm, more desirably 50 µm. Here, the average particle size of the above-mentioned fine powder is desirably set to a submicron level.

With respect to materials for the lubricant, not particularly limited, examples thereof include polyoxyethylene alkyl ether and polyoxypropylene alkyl ether.

Here, 0.5 to 8 parts by weight of the lubricant of this type is desirably added to 100 parts by weight of the ceramic powder. When the addition is less than 0.5 parts by weight, the precipitation rate of the ceramic particles in the filler paste becomes greater, causing separation immediately. Moreover, since the flow-passage resistance against the filler paste becomes higher, it sometimes becomes difficult to insert the filler paste into the through holes of the ceramic dried body sufficiently. In contrast, when the addition exceeds 8 parts by weight, shrinkage becomes greater at the time of firing the ceramic dried body, resulting in more frequent occurrence of crack.

The above-mentioned polyoxyethylene alkyl ether or polyoxypropylene alkyl ether is prepared by conducting addition-polymerization of ethylene oxide or propylene oxide to alcohol, and has a structure in which an alkyl group is bonded to oxygen at one end of polyoxyethylene (polyoxypropylene). With respect to the above-mentioned alkyl group, not particularly limited, for example, those groups having 3 to 22 carbon atoms are proposed. The alkyl group may have a straight-chain structure or a side-chain structure.

Moreover, the above-mentioned polyoxyethylene alkyl ether and polyoxypropylene alkyl ether may have a structure in which an alkyl group is bonded to a block copolymer consisting of polyoxyethylene and polyoxypropylene.

With respect to the solvent, not particularly limited, for example, diethylene glycol mono-2-ethylhexyl ether may be used.

Here, 5 to 20 parts by weight of the solvent of this type is desirably added to 100 parts by weight of ceramic powder. When the addition thereof is out of this range, it becomes difficult to inject the filler paste into the through holes of the ceramic dried body.

With respect to the dispersant, not particularly limited, for example, a surfactant consisting of phosphate salt may be used. With respect to the phosphate salt, examples thereof include phosphate salt of polyoxyethylene alkyl ether, phosphate salt of polyoxyethylene alkyl phenyl ether and alkyl phosphate salt. Here, 0.1 to 5 parts by weight of the dispersant of this type is desirably added to 100 parts by weight of ceramic powder. The amount of addition of less than 0.1 part by weight tends to fail to evenly disperse ceramic particles in the filler paste, while the amount of addition exceeding 5 parts by weight results in a reduction in the density of the filler paste to cause a greater amount of shrinkage at the time of sintering, thus leading to more frequent occurrence of crack.

With respect to the above-mentioned binder, not particularly limited, examples thereof include: (metha)acrylate ester-based compounds, such as n-butyl (metha)acrylate, n-pentyl (metha)acrylate, n-hexyl (metha)acrylate, for example.

Here, 1 to 10 parts by weight of the binder of this type is desirably added to 100 parts by weight of ceramic powder. The amount of addition of less than 1 part by weight tends to cause a failure in sufficiently maintaining a bonding strength between the ceramic particle and the other adhesives. In contrast, the amount of addition exceeding 10 parts by weight causes an excessive increase in the amount of the binder and the subsequent greater amount of shrinkage at the time of sintering, resulting in more frequent occurrence of crack.

Then, the ceramic dried body to which the filler paste (plug) is injected is subj ected to degreasing and firing processes under predetermined conditions so that a honeycomb filter that is made of porous ceramics, and constituted by a single sintered body as a whole is manufactured.

Here, with respect to degreasing and sintering conditions and the like of the ceramic dried body, conditions that are conventionally used for manufacturing a honeycomb filter made of porous ceramics can be applied.

In the case where the honeycomb filter of the present invention has a structure in which a plurality of porous ceramic members are combined with one another through sealing material layers, as shown in Fig. 2, first, an extrusion-molding process is carried out by using a material paste mainly composed of ceramics as described earlier so that a raw molded body, which has a shape corresponding to the porous ceramic member 30 as shown in Fig. 3, is formed.

Here, with respect to the above-mentioned material paste, the same material paste as explained in the honeycomb filter constituted by a single sintered body may be used.

Next, the above-mentioned raw molded body is dried by using a microwave dryer, for example, to become a dried body, and predetermined through holes are then filled with a filler paste that is going to be plugs; thereafter, the above-mentioned through holes are subjected to mouth sealing processes so as to be sealed.

Here, with respect to the filler paste, the same filler paste as explained in the honeycomb filter constituted by a single sintered body may be used, and with respect to the mouth sealing processes, the same method as the above-mentioned honeycomb filter 10 may be used, except that the subject to be filled with the filler paste is different.

Next, the dried body that has been subjected to the mouth sea ling processes is subjected to degreasing and firing processes under predetermined conditions so that a porous ceramic member having a structure in which a plurality of through holes are placed in parallel with one another in the length direction with partition wall interposed therebetween is manufactured.

Here, with respect to the degreasing and sintering conditions, for example, of the above-mentioned molded product, the same conditions as those conventionally used for manufacturing a honeycomb filter in which a plurality of porous ceramic members are combined with one another through sealing material layers may be applied.

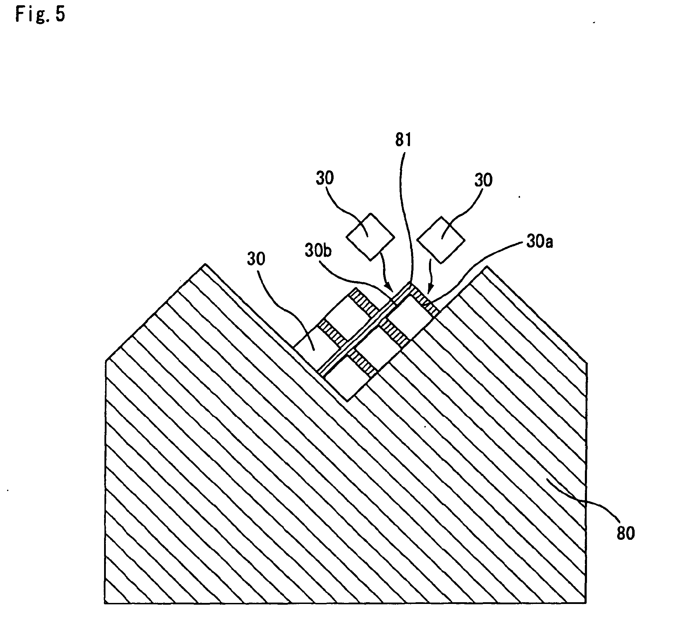

Next, as shown in Fig. 5, porous ceramic members 30 are placed on a base 80 the upper portion of which is designed to have a V-shape in its cross-section so as to allow the porous ceramic members 30 to be stacked thereon in a tilted manner, and sealing material paste to form a sealing material layer 24 is then applied onto two side faces 30a and 30b facing upward with an even thickness to form a sealing material paste layer 81; thereafter, a laminating process for forming another porous ceramic member 30 on this sealing material paste layer 81 is successively repeated so that a rectangular columnar laminated body 30 having a predetermined size is manufactured. At this time, with respect to the porous ceramic members 30 corresponding to four corners of the laminated body of the rectangular columnar porous ceramic member 30, a triangular columnar porous ceramic member 30c, which is formed by cutting a quadrangular columnar porous ceramic member into two, is bonded to a resin member 82 having the same shape as the triangular columnar porous ceramic member 30c by using a both-sided tape with easy peelability to prepare a corner member, and these corner members are used for the four corners of the laminated body, and after the lamination processes of the porous ceramic members 30, all the resin members 82 constituting the four corners of the laminated body of the rectangular columnar ceramic member 30 are removed; thus, a laminated body of the rectangular columnar porous ceramic member 30 is allowed to have a polygonal column shape in its cross section. With this arrangement, it is possible to reduce the quantity of a waste corresponding to porous ceramic members to be disposed of, after the formation of the ceramic block by cutting the peripheral portion of the laminated body.

With respect to the method for manufacturing the laminated body having a polygonal column shape in its cross section except for the method shown in Fig. 5, for example, a method in which the porous ceramic members to be located on four corners are omitted and a method in which porous ceramic members having a triangular shape are combined with one another may be used, in accordance with the shape of a honeycomb filter to be manufactured. Here, a laminated body of a quadrangular columnar ceramic member may of course be manufactured.

Here, with respect to the material used for forming the sealing material paste, the same materials as described in the honeycomb filter of the present invention may be used; therefore, the description thereof is omitted.

Next, the laminated body of this porous ceramic member 30 is heated so that the sealing material paste layer 81 is dried and solidified to become a sealing material layer 24, and the peripheral portion of this is then cut into a shape as shown in Fig. 2 by using, for example, a diamond cutter so that a ceramic block 25 is manufactured.

Then, a sealingmaterial layer 26 is formed on the periphery of the ceramic block 25 by using the sealing material paste so that a honeycomb filter having a structure in which a plurality of porous ceramic members are combined with one another through sealing material layers is manufactured.

Each of the honeycomb filters manufactured in this manner has a column shape, and also has a structure in which a number of through holes are placed in parallel with one another with a partition wall interposed therebetween.

In the case where the honeycomb filter has a structure constituted by a single sintered body as a whole as shown in Fig. 1, the wall portion separating a number of through holes function as filters for collecting particulates as a whole; in contrast, in the case where the honeycomb filter has a structure in which a plurality of porous ceramic members are combined with one another through sealing material layers as shown in Fig. 2, since the wall portion separating a number of through holes is constituted by a partition wall forming the porous ceramic member and a sealing material layer used for combining the porous ceramic members, one portion thereof, that is, the portion of the partition wall that is not made in contact with the sealing material layer of the porous ceramic member functions as the filter for collecting particles.

The honeycomb filter of the present invention is placed and used in an exhaust gas purifying device to be installed in an exhaust passage of an internal combustion engine such as an engine, for example. Here, in the honeycomb filter of the present invention, with respect to the regenerating method for removing fine particles that have been collected and accumulated, for example, a method in which a back-washing process is carried out by utilizing gas flows may be used, or the method except for this may be used. With respect to the method except for this method, although not particularly limited, for example, a method in which fine particles are burned and removed by heating exhaust gases may be used.

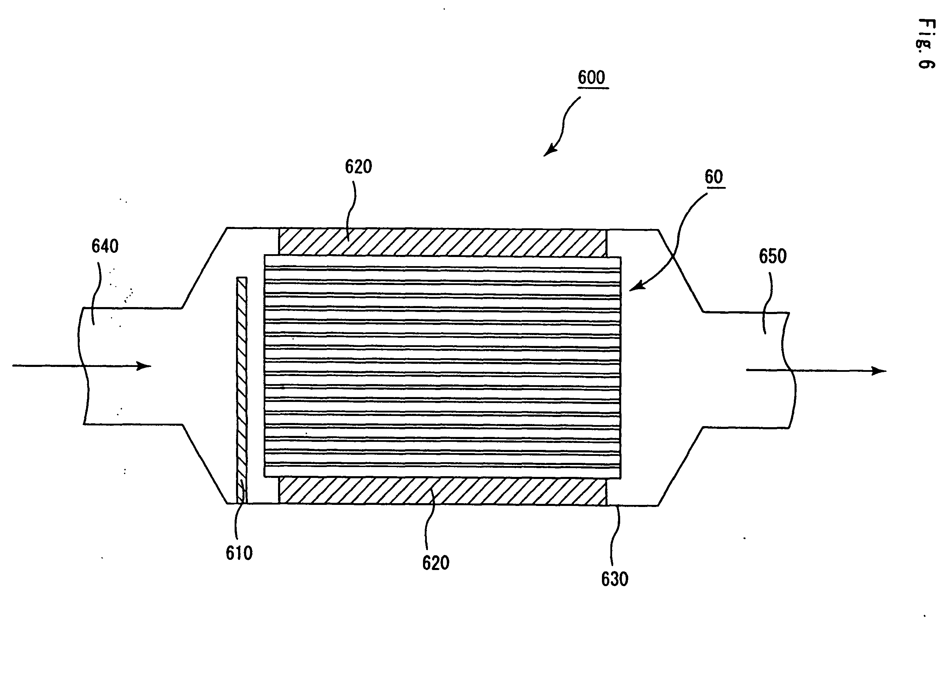

Fig. 6 is a cross-sectional view that schematically shows one example of an exhaust gas purifying device in which the honeycomb filter of the present invention is installed. Here, in the honeycomb filter of the present invention shown in Fig. 6, the above-mentioned method in which fine particles are removed by heating exhaust gases is used as the regenerating method for removing fine particles that have been collected and accumulated.

As shown in Fig. 6, an exhaust gas purifying device 600 is mainly constituted by a honeycomb filter 60 according to the present invention, a casing 630 that covers the periphery of the honeycomb filter 60, a holding sealing material 620 placed between the honeycomb filter 60 and the casing 630, and a heating means 610 placed on the exhaust gas inlet side of the honeycomb filter 60, and an introduction pipe 640, coupled to an internal combustion engine such an engine, is connected to one end on the side to which exhaust gases of the casing 630 are introduced, and a discharging pipe 650, coupled to the outside, is connected to the other end of the casing 630. Here, in Fig. 6, arrows indicate flows of the exhaust gases.

Here, in Fig. 6, the honeycomb filter 60 may be prepared as the honeycomb filter 10 shown in Fig. 1, or as the honeycomb filter 20 shown in Fig. 2.

In the exhaust gas purifying device 600 of the present invention having the above-mentioned arrangement, exhaust gases, discharged from an internal combustion engine such as an engine or the like, are introduced into the casing 630 through the introduction pipe 640, and allowed to pass through a wall portion (partition wall) from the through hole of the honeycomb filter 60 so that, after particulates therein have been collected through this wall portion (partition wall) so that the exhaust gases have been purified, the resulting exhaust gases are discharged outside through the discharging pipe 650.

When a large amount of particulates have accumulated on the wall portion (a partition wall) of the honeycomb filter 60 to cause a high pressure loss, a regenerating process is carried out on the honeycomb filter 60.

In the above-mentioned regenerating process, exhaust gases, heated by the heating means 610, are allowed to flow into the through holes of the honeycomb filter 60 so that the honeycomb filter 60 is heated and the particulates accumulated on the wall portion (partition wall) are burned and removed.

With respect to the material for the holding sealing material 620, not particularly limited, examples thereof include inorganic fibers, such as crystalline alumina fibers, alumina-silica fibers, silica fibers, for example, and fibers containing one or more kinds of these inorganic fibers.

Moreover, the holding sealing material 620 desirably contains alumina and/or silica. This structure makes it possible to provide superior heat resistance and durability in the holding sealing material 620. In particular, the holding sealing material 620 desirably contains 50% by weight or more of alumina. This structure makes it possible to provide improved elasticity even under high temperatures in a range from 900 to 950°C, and consequently to enhance the holding strength for the honeycomb filter 60.

Furthermore, desirably, the holding sealing material 620 is subjected to a needle punching process. This arrangement allows the fibers constituting the holding sealing material 620 to entangle with one another to improve elasticity and enhance the holding strength for the honeycomb filter 60.

With respect to the shape of the holding sealing material 620, not particularly limited as long as it can be applied onto the periphery of the honeycomb filter 60, any desired shape may be used; and the following shape is proposed: a convex portion is formed on one side of a base portion having a rectangular shape, with a concave section being formed in the side opposing to the one side, so that when put on the periphery of the honeycomb filter 60, the convex portion and the concave section are just fitted to each other. This structure makes the holding sealing material 620 covering the periphery of the honeycomb filter 60 less susceptible to deviations.

With respect to the material for the casing 630, not particularly limited, for example, stainless and the like may be used.

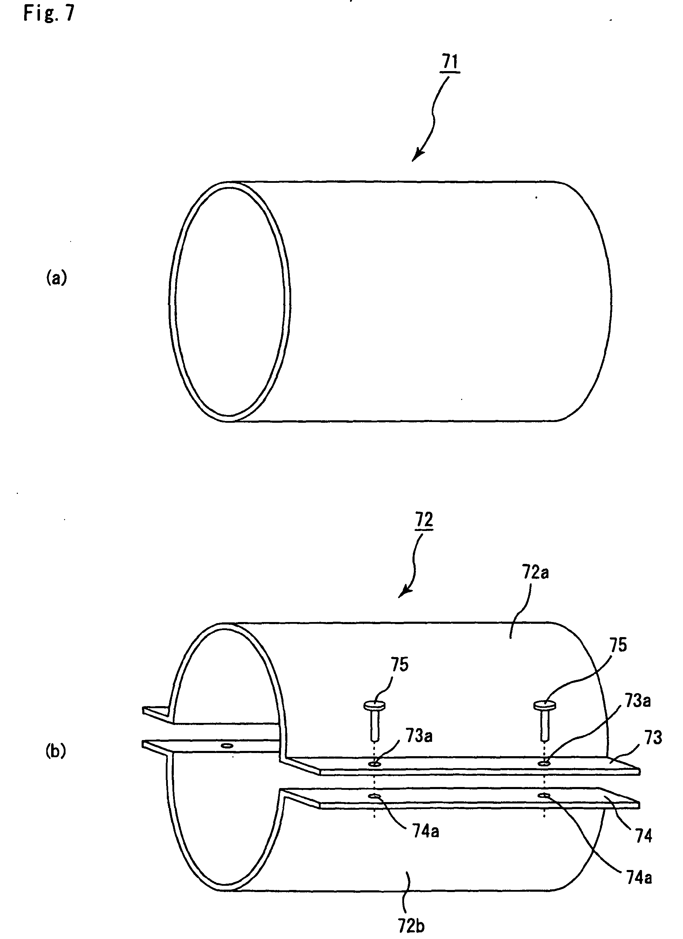

Moreover, with respect to the shape of the casing, not particularly limited, a cylinder shape as shown by a casing 71 of Fig. 7 (a) may be used, or a two-division shell shape in which a cylinder is divided into two portions in its axis direction as shown by a casing 72 of Fig. 7(b) may be used.

The size of the casing 630 is appropriately adjusted so that the honeycomb filter 60 is placed therein through the holding sealing material 620. As shown in Fig. 6, the introduction pipe 640 used for introducing exhaust gases is connected to one of the end faces of the casing 630, and the discharging pipe 650 for discharging exhaust gases is connected to the other end face.

The heating means 610, which is installed so as to heat the gas to be made to flow into the through holes to burn and remove the particulates deposited on the wall portion (partition wall) in the regenerating process of the honeycomb filter 60 as described above, and with respect to the heating means 610, not particularly limited, for example, a device such as an electric heater, a burner, for example, may be used.

With respect to the gas to be made to flow into the through holes, for example, exhaust gases and air are used.

Moreover, as shown in Fig. 6, the exhaust gas purifying device of this type may have a system in which the honeycomb filter 60 is heated by the heating means 610 placed on the exhaust gas inlet side of the honeycomb filter 60, or a system in which an oxidizing catalyst is supported on the honeycomb filter, with hydrocarbon being allowed to flow into the honeycomb filter supporting the oxidizing catalyst, so that the honeycomb filter is allowed to generate heat, or a system in which an oxidizing catalyst is placed on the exhaust gas inlet side of the honeycomb filter and the oxidizing catalyst is allowed to generate heat by supplying hydrocarbon to the oxidizing catalyst so that the honeycomb filter is heated.

Since the reaction between the oxidizing catalyst and hydrocarbon is a heat generating reaction, the honeycomb filter can be regenerated in parallel with the exhaust gas purifying process, by utilizing a large amount of heat generated during the reaction.

Upon manufacturing an exhaust gas purifying device in which the honeycomb filter of the present invention is installed, first, a holding sealing material with which the periphery of the honeycomb filter of the present invention is coated is prepared.

In order to form the holding sealing material, first, an inorganic mat-shaped matter (web) is formed by using inorganic fibers, such as crystalline alumina fibers, alumina-silica fibers, silica fibers, for example, and fibers, for example, containing one or more kinds of these inorganic fibers.

Here, with respect to the method for forming the above-mentioned inorganic mat-shaped matter, not particularly limited, for example, a method in which the above-mentioned fibers and the like are dispersed in a solution containing an adhesive so that, by utilizing a paper machine, for example for forming paper, an inorganic mat-shaped matter is formed is proposed.

Moreover, the above-mentioned inorganic mat-shaped matter is desirably subj ected to a needle punching process. This needle punching process allows the fibers to entangle with one another so that it is possible to prepare a holding sealing material that has high elasticity and is superior in the holding strength for the honeycomb filter.

Thereafter, the above-mentioned inorganic mat-shaped matter is subj ected to a cutting process so that a holding sealing material, which has the above-mentioned shape in which a convex portion is formed on one s ide of a base portion having a rectangular shape, with a concave section being formed in the side opposing to the one side, is formed.

Next, the periphery of the honeycomb filter of the present invention is coated with the above-mentioned holding sealing material so that the holding sealing material is fixed thereon.

With respect to the means for fixing the above-mentioned holding sealing material, not particularly limited, for example, a means for bonding the holding sealing material by an adhesive or a means for tying it by using a string-shaped member may be used. Moreover, the sequence may proceed to the next process with the honeycomb filter being coated with the holding sealing material, without fixing it by using any specific means. Here, the above-mentioned string-shaped member may be made of a material to be decomposed through heat. Even if the string-shaped member is decomposed through heat after the honeycomb filter has been placed inside the casing, the holding sealing material is free from peeling as far as the honeycomb filter has already been placed inside the casing.

Next, the honeycomb filter that has been subjected to the above-mentioned processes is placed inside the casing.

Here, since the material, shape, structure and the like of the above-mentioned casing have been described earlier, the description thereof is omitted.

With respect to the method for installing the honeycomb filter in the casing, in the case where the casing is prepared as a cylindrical casing 71 (Fig. 7 (a)), for example, the following method is proposed: a honeycomb filter coated with the holding sealing material is pushed into one of its end faces, and after having been placed at a predetermined position, end faces to be connected to an introduction pipe, piping, a discharging pipe and the like are formed on the two ends of the casing 71. Here, the casing 71 may have a cylinder shape with a bottom face.

In this process, in order to prevent the secured honeycomb filter from easily moving, factors, such as the thickness of the holding sealing material, the size of the honeycomb filter, the size of the honeycomb filter and the size of the casing 71, need to be adjusted to a degree in which the pushing process can be carried out with a considerably high pressing force being applied.

Moreover, in the case where the casing is prepared as a two-division shell-shaped casing 72 as shown in Fig. 7(b), for example, the following method is proposed: after a honeycomb filter has been placed at a predetermined position inside a lower shell 72b of half-cylinder, an upper shell 72a of half-cylinder is placed on the lower shell 72b so that through holes 73a formed in an upper fixing portion 73 and through holes 74a formed in a lower fixing portion 74 are made coincident with each other. Further, a bolt 75 is inserted through each of the through holes 73a and 74a and fastened with a nut, for example, so that the upper shell 72a and the lower shell 72b are secured to each other. Then, end faces that have openings to be used for connection to an introduction pipe, piping, a discharging pipe, for example, are formed on two ends of the casing 72. In this case also, in order to prevent the secured honeycomb filter from moving, the factors, such as the thickness of the holding sealingmaterial, the size of the honeycomb filter, the size of the honeycomb filter and the size of the casing 72, need to be adjusted.

This two-division shell-shaped casing 72 makes it possible to carry out exchanging processes for the honeycomb filter placed inside thereof more easily in comparison with the cylindrical casing 71.

Next, a heating means, which is used for heating gases to be allowed to flow into the through holes in the honeycomb filter upon carrying out a regenerating process for the honeycomb filter of the present invention, is installed therein.

With respect to the heatingmeans , not particularly limited, for example, an electric heater or a burner, may be used.

The above-mentioned heating means is normally placed in the vicinity of the end face on the exhaust gas inlet side of the honeycomb filter placed inside the casing.

Additionally, as described in the above-mentioned exhaust gas purifying device, the oxidizing catalyst may be supported on the honeycomb filter of the present invention without installing the above-mentioned heating means, or the oxidizing catalyst may be placed on the exhaust gas inlet side of the honeycomb filter.

Next, the casing in which the honeycomb filter of the present invention and the heating means are installed is connected to an exhaust gas passage of an internal combustion engine and thus an exhaust gas purifying device in which the honeycomb filter of the present invention is installed can be manufactured.

More specifically, the end face of the casing on the side to which the heating means is attached is connected to the introduction pipe that is coupled to the internal combustion engine such as an engine, for example, with the other end face being connected to the discharging pipe connected to the outside.

### BEST MODE FOR CARRYING OUT THE INVENTION

The following description will be given of the present invention in detail by means of examples; however, the present invention is not intended to be limited by these examples.

### (Example 1)

(1) Powder of α-type silicon carbide having an average particle size of 10 µm (60% by weight) and powder of β-type silicon carbide having an average particle size of 0. 5 µm (40% by weight) were wet-mixed, and to 100 parts by weight of the resulting mixture were added and kneaded, 5 parts by weight of an organic binder (methyl cellulose) and 10 parts by weight of water to prepare a material paste.
   Next, the above-mentioned material paste was loaded into an extrusion-molding machine, and extruded at an extruding rate of 10 cm/min so that a ceramic formed body having almost the same shape as the porous ceramic member 30 shown in Fig. 3 was formed, and the ceramic formed body was dried by using a microwave dryer to prepare a ceramic dried body.
   Next, powder of α-type silicon carbide having an average particle sizeof 10 µm (60%byweight) and powder of β-type silicon carbide having an average particle size of 0.5 µm (40% by weight) were wet-mixed, and to 100 parts by weight of the resultingmixture were added 2 parts by weight of a lubricant made of polyoxyethylene monobutyl ether (trade name: UNILOOP, made by NOF Corporation), 8 parts by weight of a solvent made of diethylene glycol mono-2-ethylhexyl ether (trade name: OX-20, made by Kyowa Hakkou Co., Ltd.), 1.1 parts by weight of a dispersant made of a phosphate-based compound (trade name: PLYSURF, made by Dai-ichi Kogyo Seiyaku Co. , Ltd.), 4 parts by weight of a binder prepared by dissolving n-butyl methacrylate in OX-20 (trade name: Binder D, made by Toei Kasei Co., Ltd.) and 0.15 parts by weight of acrylic particles so as to be evenly mixed; thus, a filler paste was prepared.
   This filler paste was loaded into the filler discharging tank 110 of the mouth sealing device 100 shown in Fig. 4, and the ceramic dried body, formed in the above-mentioned process, was moved and secured to a predetermined position; then, the filler discharging tank 110 was moved so that the mask 111 was made in contact with the end face of the ceramic dried body. At this time, the opening section 111a of the mask 111 and the through hole of the ceramic dried body were aligned face to face with each other.
   Next, a predetermined pressure was applied to the filler discharging tank 110 by using a mono-pump so that the filler paste was discharged from the opening section 111a of the mask 111, and allowed to enter the end portion of the through hole of the ceramic block dried body; thus, a mouth sealing process was carried out.
   Next, the ceramic dried body that had been subjected to the mouth sealing process was again dried by using a microwave drier, the resulting dried body was then degreased at 400°C, and sintered at 2200°C in a normal-pressure argon atmosphere for 4 hours to manufacture a porous ceramic member, as shown in Fig. 2, which was made of a silicon carbide sintered body, and had a size of 33 mm × 33 mm × 300 mm, the number of through holes of 31 pcs/cm² and a thickness of the partition wall of 0.3 mm.
(2) Next, a number of the porous ceramic members were combined with one another by using a heat-resistant adhesive paste containing 19.6% by weight of alumina fibers having a fiber length of 0.2 mm, 67.8% by weight of silicon carbide particles having an average particle size of 0.6 µm, 10.1% by weight of silica sol and 2.5% by weight of carboxy methyl cellulose through the method explained by reference to Fig. 5, and then cut by using a diamond cutter; thus, a cylindrical ceramic block having a diameter of 165 mm, as shown in Fig. 2, was obtained.

Next, ceramic fibers made of alumina silicate (shot content: 3%, fiber length: 0.1 to 100 mm) (23.3% by weight), which served as inorganic fibers, silicon carbide powder having an average particle size of 0.3 µm (30.2% by weight), which served as inorganic particles, silica sol (SiO₂ content in the sol: 30% by weight) (7% by weight), which served as an inorganic binder, carboxymethyl cellulose (0.5% by weight), which served as an organic binder, and water (39% by weight) were mixed and kneaded to prepare a sealing material paste.

Next, a sealing material paste layer having a thickness of 1.0 mm was formed on the peripheral portion of the ceramic block by using the above-mentioned sealing material paste. Further, this sealing material paste layer was dried at 120°C so that a cylindrical honeycomb filter, as shown in Fig. 1, was manufactured.

In the honeycomb filter thus manufactured, the columnar body except for the plug had an average pore diameter of 10 µm with a porosity of 20%, and the plug had a porosity of 3%; thus, the porosity of the plug was 0.15 times as much as the porosity of the columnar body.

### (Example 2)

The same processes as those of Example 1 were carried out except that a filler paste, which had been prepared by wet-mixing powder of α-type silicon carbide having an average particle size of 10 µm (60% by weight) and powder of β-type silicon carbide having an average particle size of 0.5 µm (40% by weight), and adding, to 100 parts by weight of the resulting mixture, 2 parts by weight of UNILOOP, 8 parts by weight of OX-20, 1.1 parts by weight of PLYSURF, 4 parts by weight of Binder D and 0.2 parts by weight of acrylic particles so as to be evenly mixed, was used to manufacture a honeycomb filter.

In the honeycomb filter according to Example 2, thus manufactured, the columnar body except for the plug had an average pore diameter of 10 µm with a porosity of 20%, and the plug had a porosity of 5%; thus, the porosity of the plug was 0.25 times as much as the porosity of the columnar body.

### (Example 3)

The same processes as those of Example 1 were carried out except that a filler paste, which had been prepared by wet-mixing powder of α-type silicon carbide having an average particle size of 10 µm (60% by weight) and powder of β-type silicon carbide having an average particle size of 0.5 µm (40% by weight), and adding, to 100 parts by weight of the resulting mixture, 4 parts by weight of UNILOOP, 11 parts by weight of OX-20, 2 parts by weight of PLYSURF, 5 parts by weight of Binder D and 10 parts by weight of acrylic particles so as to be evenly mixed, was used to manufacture a honeycomb filter.

In the honeycomb filter according to Example 3, thus manufactured, the columnar body except for the plug had an average pore diameter of 10 µm with a porosity of 20%, and the plug had a porosity of 30%; thus, the porosity of the plug was 1.5 times as much as the porosity of the columnar body.

### (Example 4)

The same processes as those of Example 1 were carried out except that a filler paste, which had been prepared by wet-mixing powder of α-type silicon carbide having an average particle size of 10 µm (70% by weight) and powder of β-type silicon carbide having an average particle size of 0.5 µm (30% by weight), and adding, to 100 parts by weight of the resulting mixture, 10 parts by weight of UNILOOP, 15 parts by weight of OX-20, 3 parts by weight of PLYSURF, 8 parts by weight of Binder D and 25 parts by weight of acrylic particles so as to be evenly mixed, was used to manufacture a honeycomb filter.

In the honeycomb filter according to Example 3, thus manufactured, the columnar body except for the plug had an average pore diameter of 10 µm with a porosity of 20%, and the plug had a porosity of 80%; thus, the porosity of the plug was 4.0 times as much as the porosity of the columnar body.

### (Comparative Example 1)

The same processes as those of Example 1 were carried out except that a filler paste, which had been prepared by mixing powder of α-type silicon carbide having an average particle size of 10 µm (60% by weight) and powder of β-type silicon carbide having an average particle size of 0.5 µm (40% by weight), and adding, to 100 parts by weight of the resulting mixture, 2 parts by weight of UNILOOP, 8 parts by weight of OX-20, 1.1 parts by weight of PLYSURF, 4 parts by weight of Binder D and 0.1 parts by weight of acrylic particles so as to be evenly mixed, was used to manufacture a honeycomb filter.

In the honeycomb filter according to Comparative Example 1, thus manufactured, the columnar body except for the plug had an average pore diameter of 10 µm with a porosity of 20%, and the plug had a porosity of 2%; thus, the porosity of the plug was 0.1 times as much as the porosity of the columnar body.

### (Comparative Example 2)

The same processes as those of Example 1 were carried out except that a filler paste, which had been prepared by mixing powder of α-type silicon carbide having an average particle size of 10 µm (70% by weight) and powder of β-type silicon carbide having an average particle size of 0.5 µm (30% by weight), and adding, to 100 parts by weight of the resulting mixture, 10 parts by weight of UNILOOP, 15 parts by weight of OX-20, 3 parts by weight of PLYSURF, 8 parts by weight of Binder D and 28 parts by weight of acrylic particles so as to be evenly mixed, was used to manufacture a honeycomb filter.

In the honeycomb filter according to Comparative Example 2, thus manufactured, the columnar body except for the plug had an average pore diameter of 10 µm with a porosity of 20%, and the plug had a porosity of 85%; thus, the porosity of the plug was 4.25 times as much as the porosity of the columnar body.

### (Example 5)

The same processes as those of Example 1 were carried out except that the material paste and the filler paste were prepared in the following manner to manufacture a honeycomb filter.

### Preparation of material paste

Powder of α-type silicon carbide having an average particle size of 10 µm (70% by weight) and powder of β-type silicon carbide having an average particle size of 0.5 µm (30% by weight) were wet-mixed, and to 100 parts by weight of the resulting mixture were added and kneaded, 13 parts by weight of an organic binder (methyl cellulose), 20 parts by weight of water and 70 parts by weight of acrylic particles having an average particle size of 10 µm to prepare a material paste.

### Preparation of filler paste

Powder of α-type silicon carbide having an average particle size of 10 µm (60% by weight) and powder of β-type silicon carbide having an average particle size of 0.5 µm (40% by weight) were mixed, and to 100 parts by weight of the resulting mixture were added 2.2 parts by weight of UNILOOP, 9 parts by weight of OX-20, 2 parts by weight of PLYSURF, 4 parts by weight of Binder D and 0.3 parts by weight of acrylic particles so as to be evenly mixed; thus, a filler paste was prepared.

In the honeycomb filter according to Example 5 thus manufactured by using the above-mentioned material paste and filler paste, the columnar body except for the plug had an average pore diameter of 10 µm with a porosity of 50%, and the plug had a porosity of 7.5%; thus, the porosity of the plug was 0.15 times as much as the porosity of the columnar body.

### (Example 6)

The same processes as those of Example 5 were carried out except that a filler paste, which had been prepared by wet-mixing powder of α-type silicon carbide having an average particle size of 10 µm (60% by weight) and powder of β-type silicon carbide having an average particle size of 0.5 µm (40% by weight), and adding, to 100 parts by weight of the resulting mixture, 4 parts by weight of UNILOOP, 11 parts by weight of OX-20, 2 parts by weight of PLYSURF, 5 parts by weight of Binder D and 5 parts by weight of acrylic particles so as to be evenly mixed, was used to manufacture a honeycomb filter.

In the honeycomb filter according to Example 6 thus manufactured, the columnar body except for the plug had an average pore diameter of 10 µm with a porosity of 50%, and the plug had a porosity of 12%; thus, the porosity of the plug was 0.24 times as much as the porosity of the columnar body.

### (Example 7)

The same processes as those of Example 5 were carried out except that a filler paste, which had been prepared by wet-mixing powder of α-type silicon carbide having an average particle size of 10 µm (70% by weight) and powder of β-type silicon carbide having an average particle size of 0.5 µm (30% by weight), and adding, to 100 parts by weight of the resulting mixture, 10 parts by weight of UNILOOP, 15 parts by weight of OX-20, 3 parts by weight of PLYSURF, 8 parts by weight of Binder D and 23 parts by weight of acrylic particles so as to be evenly mixed, was used to manufacture a honeycomb filter.

In the honeycomb filter according to Example 7 thus manufactured, the columnar body except for the plug had an average pore diameter of 10 µm with a porosity of 50%, and the plug had a porosity of 75%; thus, the porosity of the plug was 1.5 times as much as the porosity of the columnar body.

### (Example 8)

The same processes as those of Example 5 were carried out except that a filler paste, which had been prepared by wet-mixing powder of α-type silicon carbide having an average particle size of 10 µm (70% by weight) and powder of β-type silicon carbide having an average particle size of 0.5 µm (30% by weight), and adding, to 100 parts by weight of the resulting mixture, 10 parts by weight of UNILOOP, 15 parts by weight of OX-20, 3 parts by weight of PLYSURF, 8 parts by weight of Binder D and 30 parts by weight of acrylic particles so as to be evenly mixed, was used to manufacture a honeycomb filter.

In the honeycomb filter according to Example 8 thus manufactured, the columnar body except for the plug had an average pore diameter of 10 µm with a porosity of 50%, and the plug had a porosity of 90%; thus, the porosity of the plug was 1.8 times as much as the porosity of the columnar body.

### (Comparative Example 3)

The same processes as those of Example 5 were carried out except that a filler paste, which had been prepared by wet-mixing powder of α-type silicon carbide having an average particle size of 10 µm (60% by weight) and powder of β-type silicon carbide having an average particle size of 0.5 µm (40% by weight), and adding, to 100 parts by weight of the resulting mixture, 2 parts by weight of UNILOOP, 8 parts by weight of OX-20, 1.1 parts by weight of PLYSURF, 4 parts by weight of Binder D and 0.2 parts by weight of acrylic particles so as to be evenly mixed, was used to manufacture a honeycomb filter.

In the honeycomb filter according to Comparative Example 3 thus manufactured, the columnar body except for the plug had an average pore diameter of 10 µm with a porosity of 50%, and the plug had a porosity of 5%; thus, the porosity of the plug was 0.1 times as much as the porosity of the columnar body.

### (Comparative Example 4)

The same processes as those of Example 5 were carried out except that a filler paste, which had been prepared by wet-mixing powder of α-type silicon carbide having an average particle size of 10 µm (70% by weight) and powder of β-type silicon carbide having an average particle size of 0.5 µm (30% by weight), and adding, to 100 parts by weight of the resulting mixture, 10 parts by weight of UNILOOP, 15 parts by weight of OX-20, 3 parts by weight of PLYSURF, 8.3 parts by weight of Binder D and 33 parts by weight of acrylic particles so as to be evenly mixed, was used to manufacture a honeycomb filter.

In the honeycomb filter according to Comparative Example 4 thus manufactured, the columnar body except for the plug had an average pore diameter of 10 µm with a porosity of 50%, and the plug had a porosity of 92%; thus, the porosity of the plug was 1.84 times as much as the porosity of the columnar body.

### (Example 9)

The same processes as those of Example 1 were carried out except that the material paste and the filler paste were prepared in the following manner to manufacture a honeycomb filter.

### Preparation of material paste

Powder of α-type silicon carbide having an average particle size of 10 µm (80% by weight) and powder of β-type silicon carbide having an average particle size of 0.5 µm (20% by weight) were wet-mixed, and to 100 parts by weight of the resulting mixture were added and kneaded, 30 parts by weight of an organic binder (methyl cellulose), 35 parts by weight of water and 80 parts by weight of acrylic particles having an average particle size of 10 µm to prepare a material paste.

### Preparation of filler paste

Powder of α-type silicon carbide having an average particle size of 10 µm (60% by weight) and powder of β-type silicon carbide having an average particle size of 0.5 µm (40% by weight) were mixed, and to 100 parts by weight of the resulting mixture were added 4 parts by weight of UNILOOP, 11 parts by weight of OX-20, 2 parts by weight of PLYSURF, 5 parts by weight of Binder D and 5 parts by weight of acrylic particles so as to be evenly mixed; thus, a filler paste was prepared.

In the honeycomb filter according to Example 9 thus manufactured by using the above-mentioned material paste and filler paste, the columnar body except for the plug had an average pore diameter of 10 µm with a porosity of 80%, and the plug had a porosity of 12%; thus, the porosity of the plug was 0.15 times as much as the porosity of the columnar body.

### (Example 10)

The same processes as those of Example 9 were carried out except that a filler paste, which had been prepared by wet-mixing powder of α-type silicon carbide having an average particle size of 10 µm (60% by weight) and powder of β-type silicon carbide having an average particle size of 0.5 µm (40% by weight), and adding, to 100 parts by weight of the resulting mixture, 4 parts by weight of UNILOOP, 11 parts by weight of OX-20, 2 parts by weight of PLYSURF, 5 parts by weight of Binder D and 7 parts by weight of acrylic particles so as to be evenly mixed, was used to manufacture a honeycomb filter.

In the honeycomb filter according to Example 10 thus manufactured, the columnar body except for the plug had an average pore diameter of 10 µm with a porosity of 80%, and the plug had a porosity of 20%; thus, the porosity of the plug was 0.25 times as much as the porosity of the columnar body.

### (Example 11)

The same processes as those of Example 9 were carried out except that a filler paste, which had been prepared by wet-mixing powder of α-type silicon carbide having an average particle size of 10 µm (70% by weight) and powder of β-type silicon carbide having an average particle size of 0.5 µm (30% by weight), and adding, to 100 parts by weight of the resulting mixture, 10 parts by weight of UNILOOP, 15 parts by weight of OX-20, 3 parts by weight of PLYSURF, 8 parts by weight of Binder D and 30 parts by weight of acrylic particles so as to be evenly mixed, was used to manufacture a honeycomb filter.

In the honeycomb filter according to Example 11 thus manufactured, the columnar body except for the plug had an average pore diameter of 10 µm with a porosity of 80%, and the plug had a porosity of 90%; thus, the porosity of the plug was 1.125 times as much as the porosity of the columnar body.

### (Comparative Example 5)

The same processes as those of Example 9 were carried out except that a filler paste, which had been prepared by wet-mixing powder of α-type silicon carbide having an average particle size of 10 µm (60% by weight) and powder of β-type silicon carbide having an average particle size of 0.5 µm (40% by weight), and adding, to 100 parts by weight of the resulting mixture, 2.2 parts by weight of UNILOOP, 9 parts by weight of OX-20, 2 parts by weight of PLYSURF, 4 parts by weight of Binder D and 0.35 parts by weight of acrylic particles so as to be evenly mixed, was used to manufacture a honeycomb filter.

In the honeycomb filter according to Comparative Example 5 thus manufactured, the columnar body except for the plug had an average pore diameter of 10 µm with a porosity of 80%, and the plug had a porosity of 10%; thus, the porosity of the plug was 0.125 times as much as the porosity of the columnar body.

### (Comparative Example 6)

The same processes as those of Example 9 were carried out except that a filler paste, which had been prepared by wet-mixing powder of α-type silicon carbide having an average particle size of 10 µm (70% by weight) and powder of β-type silicon carbide having an average particle size of 0.5 µm (30% by weight), and adding, to 100 parts by weight of the resulting mixture, 10 parts by weight of UNILOOP, 15 parts by weight of OX-20, 3 parts by weight of PLYSURF, 8.3 parts by weight of Binder D and 33 parts by weight of acrylic particles so as to be evenly mixed, was used to manufacture a honeycomb filter.

In the honeycomb filter according to Comparative Example 6 thus manufactured, the columnar body except for the plug had an average pore diameter of 10 µm with a porosity of 80%, and the plug had a porosity of 92%; thus, the porosity of the plug was 1.15 times as much as the porosity of the columnar body.

With respect to the honeycomb filters according to Examples 1 to 11 and Comparative Examples 1 to 6 manufactured as described above, the porosity (%) of the columnar body, the porosity (%) of the plug and the multiplying ratio of the porosity of the plug to the porosity of the columnar body are collectively shown in Table 1.

Moreover, with respect to the honeycomb filters according to Examples 1 to 11 and Comparative Examples 1 to 6 that had been sintered, it was confirmed whether or not there was any gap between the plug and the partition wall as well as whether or not there was any crack occurring in the plug and a portion of the partition wall contacting the plug, and the honeycomb filters in which neither a gap nor a crack occurred were subj ected to an endurance test in which each of the honeycomb filters according to the respective examples and comparative examples was placed in an exhaust gas purifying device as shown in Fig. 6, which was installed in an exhaust passage of an engine, and the engine was driven at the number of revolutions of 3000 min⁻¹ with a torque of 50 Nm for 10 hours so that an exhaust gas purifying process was carried out. After the above-mentioned endurance test, each of the honeycomb filters was taken out and visually observed as to whether or not any cracks occurred. Moreover, the honeycomb filters that had no cracks after the endurance test were further subjected to heat cycling tests in which the above-mentioned endurance tests were repeated 300 times, and each of the honeycomb filters was taken out and visually observed as to whether or not any cracks occurred.

The results are shown in the following Table 1.

**Table 1**

| | Porosity (%) | | Multiplying ratio (Note 1) | Presence/absence of cracks and the like(Yes/No) | | |
|---|---|---|---|---|---|---|
| | Columnar body | Plug | | After firing process | After endurance test | After heat cycling test |
| Example 1 | 20 | 3 | 0.15 | No | No | Yes |
| Example 2 | 20 | 5 | 0.25 | No | No | No |
| Example 3 | 20 | 30 | 1.5 | No | No | No |
| Example 4 | 20 | 80 | 4.0 | No | No | Yes |
| Example 5 | 50 | 7.5 | 0.15 | No | No | Yes |
| Example 6 | 50 | 12 | 0.24 | No | No | No |
| Example 7 | 50 | 75 | 1.5 | No | No | No |
| Example 8 | 50 | 90 | 1.8 | No | No | Yes |
| Example 9 | 80 | 12 | 0.15 | No | No | Yes |
| Example 10 | 80 | 20 | 0.25 | No | No | No |
| Example 11 | 80 | 90 | 1.125 | No | No | No |
| Comparative Example 1 | 20 | 2 | 0.1 | No | Yes | - |
| Comparative Example 2 | 20 | 85 | 4.25 | Yes | - | - |
| Comparative Example 3 | 50 | 5 | 0.1 | No | Yes | - |
| Comparative Example 4 | 50 | 92 | 1.84 | Yes | - | - |
| Comparative Example 5 | 80 | 10 | 0.125 | No | Yes | - |
| Comparative Example 6 | 80 | 92 | 1.15 | Yes | - | - |

| | | | | | | |
|---|---|---|---|---|---|---|
| Note 1) Multiplying ratio: Multiplying ratio of porosity of plug to porosity of columnar body | | | | | | |

As shown in Table 1, in any one of the honeycomb filters according to Examples 2, 3, 6, 7, 10 and 11, no gap was observed between the plug and the partition wall, and no cracks were observed in the plug and a portion of the partition wall contacting the plug, in any of the cases after the firing process, after the endurance test and after heat cycling tests. Moreover, in any one of the honeycomb filters according to Examples 1, 4, 5, 8 and 9, no gap was observed between the plug and the partition wall, and no cracks were observed in the plug and a portion of the partition wall contacting the plug, after the firing process as well as after the endurance test; however, after the heat cycling tests, cracks were observed.

In contrast, in the honeycomb filters according to Comparative Examples 1, 3 and 5, no cracks or the like were observed between the plug and the partition wall after the firing process; however cracks were observed in the plug and a portion of the partition wall contacting the plug after the endurance test. Moreover, in the honeycomb filter according to Comparative Example 2, a gap was observed between the plug and the partition wall after the firing process, and in the honeycomb filters according to Comparative Examples 4 and 6, cracks were observed in the plug after the firing process.

The results of the evaluation tests of the honeycomb filters according to Examples 1 to 11 show that those honeycomb filters in which the columnar body has a porosity in a range from 20 to 80% and the plug has a porosity of 90% or less, with the porosity being 0.15 to 4.0 times as much as the porosity of the columnar body are free from a gap occurring between the plug and the partition wall as well as occurrence of cracks in the plug and a portion of the partition wall contacting the plug, after the firing process and at the time of heating; however, the results of the evaluation tests of the honeycomb filters according to Examples 1, 4, 5 and 8 as well as 9 show that those filters in which the porosity of the plug is less than 0.25 times as much as the porosity of the columnar body, or exceeds 1.5 times as much as the porosity of the columnar body tend to cause cracks in the plug and a portion of the partition wall contacting the plug, after a long-term repetitive use.

Further, the results of the evaluation tests of the honeycomb filters according to Comparative Examples 1, 3 and 5 show that in the case where the porosity of the plug is less than 0.15 times as much as the porosity of the columnar body, even if no cracks occur in the plug and a portion in the partition wall contacting the plug, the difference between the coefficient of thermal expansion of the columnar body and the coefficient of thermal expansion of the plug becomes greater, with the result that, when the columnar body and the plug are heated by high-temperature exhaust gases, thermal stresses are accumulated between the two members, resulting in cracks in the plug and a portion of the partition wall contacting the plug.

Moreover, the results of the evaluation tests of the honeycomb filter according to Comparative Example 2 show that when the porosity of the plug exceeds 4.0 times as much as the porosity of the columnar body, a gap tends to occur between the plug and a portion of the partition wall contacting the plug after the firing process.

Furthermore, the results of the evaluation tests of the honeycomb filters according to Comparative Examples 4 and 6 show that in the case where the porosity of the plug exceeds 90%, even if the porosity of the plug is 0.15 to 4.0 times as much as the porosity of the columnar body, the strength of the plug is lowered to cause cracks in the plug and a portion in the partition wall contacting the plug during the firing process.

In this manner, any of the honeycomb filters according to Comparative Examples 1 to 6 fail to sufficiently function as a filter.

### (Example 12)

(1) The same processes as Example 1 were carried out to manufacture a honeycomb filter, in which: the columnar body except for the plug had an average pore diameter of 10 µm with a porosity of 20%, the plug had a porosity of 3%, and the porosity of the plug was 0.15 times as much as the porosity of the columnar body.
(2) Powder of γ-Al₂O₃ ground to a particle size of 5 µm or less was put into 1,3-butane diol, and this was stirred at 60°C for 5 hours so that a 1,3-butane diol solution in a slurry state, which contained 3% by weight of alumina, was prepared. The honeycomb filter was immersed in this 1,3-butane diol solution, and this was then heated at 150°C for 2 hours, at 400°C for 2 hours and at 700°C for 8 hours so that an alumina layer serving as a catalyst supporting film was formed on the surface of the honeycomb filter (columnar body except for a plug, and the plug) at a rate of 1 g/L.

Diammine dinitro platinum nitric acid ([Pt(NH₃)₂(NO₂)₂]HNO₃) having a platinum concentration of 4.53% by weight was diluted in distilled water, and the honeycomb filer having a water absorbing amount of 28.0 g/L was immersed therein so that Pt was deposited thereon at a rate of 2 g/L, and this was then heated at 110°C for 2 hours, and heated at 500°C for one hour in a nitrogen atmosphere so that a honeycomb filter having a platinum catalyst deposited on the surface thereof was manufactured.

In the honeycomb filter having the platinum catalyst deposited on the surface thereof, the columnar body except for the plug had an average pore diameter of 10 µm with a porosity of 20%, the plug had a porosity of 3%, and the porosity of the plug was 0.15 times as much as the porosity of the columnar body.

### (Example 13)

(1) The same processes as Example 2 were carried out to manufacture a honeycomb filter, in which: the columnar body except for the plug had an average pore diameter of 10 µm with a porosity of 20%, the plug had a porosity of 5%, and the porosity of the plug was 0.25 times as much as the porosity of the columnar body.
(2) The same processes as Example 12 were carried out so that an alumina layer serving as a catalyst supporting film was formed on the surface of a honeycomb filter (columnar body except for a plug, and the plug) at a rate of 1 g/L; thus, a honeycomb filter having a platinum catalyst deposited on the surface thereof was manufactured.

In the honeycomb filter having the platinum catalyst deposited on the surface thereof, the columnar body except for the plug had an average pore diameter of 10 µm with a porosity of 20%, the plug had a porosity of 5%, and the porosity of the plug was 0.25 times as much as the porosity of the columnar body.

### (Example 14)

The same processes as those of Example 1 were carried out except that a filler paste, which had been prepared by wet-mixing powder of α-type silicon carbide having an average particle size of 10 µm (60% by weight) and powder of β-type silicon carbide having an average particle size of 0.5 µm (40% by weight), and adding, to 100 parts by weight of the resulting mixture, 2 parts by weight of UNILOOP, 8.5 parts by weight of OX-20, 1.3 parts by weight of PLYSURF, 4 parts by weight of Binder D and 0.25 parts by weight of acrylic particles so as to be evenly mixed, was used to manufacture a honeycomb filter.

In the honeycomb filter thus manufactured, the columnar body except for the plug had an average pore diameter of 10 µm with a porosity of 20%, and the plug had a porosity of 6%; thus, the porosity of the plug was 0.30 times as much as the porosity of the columnar body.
(2) The same processes as Example 12 were carried out so that an alumina layer serving as a catalyst supporting film was formed on the surface of a honeycomb filter (columnar body except for a plug, and the plug) at a rate of 1 g/L; thus, a honeycomb filter having a platinum catalyst deposited on the surface thereof was manufactured.

In the honeycomb filter having the platinum catalyst deposited on the surface thereof, the columnar body except for the plug had an average pore diameter of 10 µm with a porosity of 20%, the plug had a porosity of 6%, and the porosity of the plug was 0. 30 times as much as the porosity of the columnar body.

### (Example 15)

(1) The same processes as Example 3 were carried out to manufacture a honeycomb filter, in which: the columnar body except for the plug had an average pore diameter of 10 µm with a porosity of 20%, the plug had a porosity of 30%, and the porosity of the plug was 1.50 times as much as the porosity of the columnar body.
(2) Powder of γ-Al₂O₃ ground to a particle size of 5 µm or less was put into 1,3-butane diol, and this was stirred at 60°C for 5 hours so that a 1,3-butane diol solution in a slurry state, which contained 3% by weight of alumina, was prepared. The honeycomb filter was immersed in this 1,3-butane diol solution. In the same manner, powder of γ-Al₂O₃ was put into 1,3-butane diol, and this was stirred at 60°C for 5 hours so that a 1, 3-butane diol solution in a slurry state, which contained 20% by weight of alumina, was prepared, and this 1,3-butane diol solution was then injected into the plug portion of the honeycomb filter. The resulting honeycomb filter was heated at 150°C for 2 hours, at 400°C for 2 hours and at 700°C for 8 hours so that an alumina layer serving as a catalyst supporting film was formed on the surface of the columnar body except for the plug of the honeycomb filter at a rate of 1 g/L, with an alumina layer being formed on the surface of the plug of the honeycomb filter at a rate of 20 g/L.

Diammine dinitro platinum nitric acid ([Pt (NH₃)₂ (NO₂)₂] HNO₃) having a platinum concentration of 4.53% by weight was diluted in distilled water, and the honeycomb filer having a water absorbing amount of 28. 0 g/L was immersed therein so that Pt was deposited thereon at a rate of 2 g/L, and this was then heated at 110°C for 2 hours, and heated at 500°C for one hour in a nitrogen atmosphere so that a honeycomb filter having a platinum catalyst deposited on the surface thereof was manufactured.

In the honeycomb filter having the platinum catalyst deposited on the surface thereof, the columnar body except for the plug had an average pore diameter of 10 µm with a porosity of 20%, the plug had a porosity of 24%, and the porosity of the plug was 1.20 times as much as the porosity of the columnar body.

### (Example 16)

(1) The same processes as Example 3 were carried out to manufacture a honeycomb filter, in which: the columnar body except for the plug had an average pore diameter of 10 µm with a porosity of 20%, the plug had a porosity of 30%, and the porosity of the plug was 1.50 times as much as the porosity of the columnar body.
(2) The same processes as Example 12 were carried out so that an alumina layer serving as a catalyst supporting film was formed on the surface of a honeycomb filter (columnar body except for a plug, and the plug) at a rate of 1 g/L; thus, a honeycomb filter having a platinum catalyst deposited on the surface thereof was manufactured.

In the honeycomb filter having the platinum catalyst deposited on the surface thereof, the columnar body except for the plug had an average pore diameter of 10 µm with a porosity of 20%, the plug had a porosity of 30%, and the porosity of the plug was 1.50 times as much as the porosity of the columnar body.

### (Example 17)

(1) The same processes as Example 4 were carried out to manufacture a honeycomb filter, in which: the columnar body except for the plug had an average pore diameter of 10 µm with a porosity of 20%, the plug had a porosity of 80%, and the porosity of the plug was 4.00 times as much as the porosity of the columnar body.
(2) The same processes as Example 12 were carried out so that an alumina layer serving as a catalyst supporting film was formed on the surface of a honeycomb filter (columnar body except for a plug, and the plug) at a rate of 1 g/L; thus, a honeycomb filter having a platinum catalyst deposited on the surface thereof was manufactured.

In the honeycomb filter having the platinum catalyst deposited on the surface thereof, the columnar body except for the plug had an average pore diameter of 10 µm with a porosity of 20%, the plug had a porosity of 80%, and the porosity of the plug was 4. 00 times as much as the porosity of the columnar body.

### (Example 18)

(1) The same processes as Example 5 were carried out to manufacture a honeycomb filter, in which: the columnar body except for the plug had an average pore diameter of 10 µm with a porosity of 50%, the plug had a porosity of 7.5%, and the porosity of the plug was 0.15 times as much as the porosity of the columnar body.
(2) The same processes as Example 12 were carried out so that an alumina layer serving as a catalyst supporting film was formed on the surface of a honeycomb filter (columnar body except for a plug, and the plug) at a rate of 1 g/L; thus, a honeycomb filter having a platinum catalyst deposited on the surface thereof was manufactured.

In the honeycomb filter having the platinum catalyst deposited on the surface thereof, the columnar body except for the plug had an average pore diameter of 10 µm with a porosity of 50%, the plug had a porosity of 7.5%, and the porosity of the plug was 0.15 times as much as the porosity of the columnar body.

### (Example 19)

(1) The same processes as Example 6 were carried out to manufacture a honeycomb filter, in which: the columnar body except for the plug had an average pore diameter of 10 µm with a porosity of 50%, the plug had a porosity of 12%, and the porosity of the plug was 0.24 times as much as the porosity of the columnar body.
(2) The same processes as Example 12 were carried out so that an alumina layer serving as a catalyst supporting film was formed on the surface of a honeycomb filter (columnar body except for a plug, and the plug) at a rate of 1 g/L; thus, a honeycomb filter having a platinum catalyst deposited on the surface thereof was manufactured.

In the honeycomb filter having the platinum catalyst deposited on the surface thereof, the columnar body except for the plug had an average pore diameter of 10 µm with a porosity of 50%, the plug had a porosity of 12%, and the porosity of the plug was 0.24 times as much as the porosity of the columnar body.

### (Example 20)

The same processes as those of Example 5 were carried out except that a filler paste, which had been prepared by wet-mixing powder of α-type silicon carbide having an average particle size of 10 µm (60% by weight) and powder of β-type silicon carbide having an average particle size of 0.5 µm (40% by weight), and adding, to 100 parts by weight of the resulting mixture, 4 parts by weight of UNILOOP, 11 parts by weight of OX-20, 2 parts by weight of PLYSURF, 5 parts by weight of Binder D and 10 parts by weight of acrylic particles so as to be evenly mixed, was used to manufacture a honeycomb filter.

In the honeycomb filter thus manufactured, the columnar body except for the plug had an average pore diameter of 10 µm with a porosity of 50%, and the plug had a porosity of 30%; thus, the porosity of the plug was 0.60 times as much as the porosity of the columnar body.
(2) The same processes as Example 15 were carried out so that an alumina layer serving as a catalyst supporting film was formed on the surface of a columnar body except for a plug of the honeycomb filter at a rate of 1 g/L, with an alumina layer serving as a catalyst supporting film being formed on the surface of the plug of the honeycomb filter at a rate of 20 g/L; thus, a honeycomb filter having a platinum catalyst deposited on the surface thereof was manufactured.

In the honeycomb filter having the platinum catalyst deposited on the surface thereof, the columnar body except for the plug had an average pore diameter of 10 µm with a porosity of 50%, the plug had a porosity of 15%, and the porosity of the plug was 0.30 times as much as the porosity of the columnar body.

### (Example 21)

(1) The same processes as Example 7 were carried out to manufacture a honeycomb filter, in which: the columnar body except for the plug had an average pore diameter of 10 µm with a porosity of 50%, the plug had a porosity of 75%, and the porosity of the plug was 1.50 times as much as the porosity of the columnar body.
(2) Powder of γ-Al₂O₃ ground to a particle size of 5 µm or less was put into 1,3-butane diol, and this was stirred at 60°C for 5 hours so that a 1,3-butane diol solution in a slurry state, which contained 3% by weight of alumina, was prepared. The honeycomb filter was immersed in this 1,3-butane diol solution. In the same manner, powder of γ-Al₂O₃ was put into a solution of 1,3-butane diol, and this was stirred at 60°C for 5 hours so that a 1,3-butane diol solution in a slurry state, which contained 40% by weight of alumina, was prepared, and this 1, 3-butane diol solution was then injected into the plug portion of the honeycomb filter. The resulting honeycomb filter was heated at 150°C for 2 hours, at 400°C for 2 hours and at 700°C for 8 hours so that an alumina layer serving as a catalyst supporting film was formed on the surface of the columnar body except for the plug of the honeycomb filter at a rate of 1 g/L, with an alumina layer being formed on the surface of the plug of the honeycomb filter at a rate of 60 g/L.

Diammine dinitro platinum nitric acid ([Pt(NH₃)₂(NO₂)₂]HNO₃) having a platinum concentration of 4.53% by weight was diluted in distilled water, and the honeycomb filer having a water absorbing amount of 28.0 g/L was immersed therein so that Pt was deposited thereon at a rate of 2 g/L, and this was then heated at 110°C for 2 hours, and heated at 500°C for one hour in a nitrogen atmosphere so that a honeycomb filter having a platinum catalyst deposited on the surface thereof was manufactured.

In the honeycomb filter having the platinum catalyst deposited on the surface thereof, the columnar body except for the plug had an average pore diameter of 10 µm with a porosity of 50%, the plug had a porosity of 60%, and the porosity of the plug was 1.20 times as much as the porosity of the columnar body.

### (Example 22)

(1) The same processes as Example 7 were carried out to manufacture a honeycomb filter, in which: the columnar body except for the plug had an average pore diameter of 10 µm with a porosity of 50%, the plug had a porosity of 75%, and the porosity of the plug was 1.50 times as much as the porosity of the columnar body.
(2) The same processes as Example 12 were carried out so that an alumina layer serving as a catalyst supporting film was formed on the surface of a honeycomb filter (columnar body except for a plug, and the plug) at a rate of 1 g/L; thus, a honeycomb filter having a platinum catalyst deposited on the surface thereof was manufactured.

In the honeycomb filter having the platinum catalyst deposited on the surface thereof, the columnar body except for the plug had an average pore diameter of 10 µm with a porosity of 50%, the plug had a porosity of 75%, and the porosity of the plug was 1.50 times as much as the porosity of the columnar body.

### (Example 23)

(1) The same processes as Example 8 were carried out to manufacture a honeycomb filter, in which: the columnar body except for the plug had an average pore diameter of 10 µm with a porosity of 50%, the plug had a porosity of 90%, and the porosity of the plug was 1.80 times as much as the porosity of the columnar body.
(2) The same processes as Example 12 were carried out so that an alumina layer serving as a catalyst supporting film was formed on the surface of a honeycomb filter (columnar body except for a plug, and the plug) at a rate of 1 g/L; thus, a honeycomb filter having a platinum catalyst deposited on the surface thereof was manufactured.

In the honeycomb filter having the platinum catalyst deposited on the surface thereof, the columnar body except for the plug had an average pore diameter of 10 µm with a porosity of 50%, the plug had a porosity of 90%, and the porosity of the plug was 1.80 times as much as the porosity of the columnar body.

### (Example 24)

(1) The same processes as Example 9 were carried out to manufacture a honeycomb filter, in which: the columnar body except for the plug had an average pore diameter of 10 µm with a porosity of 80%, the plug had a porosity of 12%, and the porosity of the plug was 0.15 times as much as the porosity of the columnar body.
(2) The same processes as Example 12 were carried out so that an alumina layer serving as a catalyst supporting film was formed on the surface of a honeycomb filter (columnar body except for a plug, and the plug) at a rate of 1 g/L; thus, a honeycomb filter having a platinum catalyst deposited on the surface thereof was manufactured.

In the honeycomb filter having the platinum catalyst deposited on the surface thereof, the columnar body except for the plug had an average pore diameter of 10 µm with a porosity of 80%, the plug had a porosity of 12%, and the porosity of the plug was 0.15 times as much as the porosity of the columnar body.

### (Example 25)

(1) The same processes as Example 10 were carried out to manufacture a honeycomb filter, in which: the columnar body except for the plug had an average pore diameter of 10 µm with a porosity of 80%, the plug had a porosity of 20%, and the porosity of the plug was 0.25 times as much as the porosity of the columnar body.
(2) The same processes as Example 12 were carried out so that an alumina layer serving as a catalyst supporting film was formed on the surface of a honeycomb filter (columnar body except for a plug, and the plug) at a rate of 1 g/L; thus, a honeycomb filter having a platinum catalyst deposited on the surface thereof was manufactured.

In the honeycomb filter having the platinum catalyst deposited on the surface thereof, the columnar body except for the plug had an average pore diameter of 10 µm with a porosity of 80%, the plug had a porosity of 20%, and the porosity of the plug was 0.25 times as much as the porosity of the columnar body.

### (Example 26)

The same processes as those of Example 9 were carried out except that a filler paste, which had been prepared by wet-mixing powder of α-type silicon carbide having an average particle size of 10 µm (60% by weight) and powder of β-type silicon carbide having an average particle size of 0.5 µm (40% by weight), and adding, to 100 parts by weight of the resulting mixture, 4 parts by weight of UNILOOP, 11 parts by weight of OX-20, 2 parts by weight of PLYSURF, 5 parts by weight of Binder D and 10 parts by weight of acrylic particles so as to be evenly mixed, was used to obtain a honeycomb filter.

In the honeycomb filter thus manufactured, the columnar body except for the plug had an average pore diameter of 10 µm with a porosity of 80%, and the plug had a porosity of 30%; thus, the porosity of the plug was 0.38 times as much as the porosity of the columnar body.
(2) Powder of γ-Al₂O₃ ground to a particle size of 5 µm or less was put into 1,3-butane diol, and this was stirred at 60°C for 5 hours so that a 1,3-butane diol solution in a slurry state, which contained 3% by weight of alumina, was prepared, and the honeycomb filter was immersed in this 1,3-butane diol solution. In the same manner, powder of γ-Al₂O₃ was put into 1,3-butane diol, and this was stirred at 60°C for 5 hours so that a 1, 3-butane diol solution in a slurry state, which contained 10% by weight of alumina, was prepared, and this 1,3-butane diol solution was then injected into the plug portion of the honeycomb filter. The resulting honeycomb filter was heated at 150°C for 2 hours, at 400°C for 2 hours and at 700°C for 8 hours so that an alumina layer serving as a catalyst supporting film was formed on the surface of the columnar body except for the plug of the honeycomb filter at a rate of 1 g/L, with an alumina layer being formed on the surface of the plug of the honeycomb filter at a rate of 15 g/L.

Diammine dinitro platinum nitric acid ([Pt (NH₃)₂ (NO₂)₂] HNO₃) having a platinum concentration of 4.53% by weight was diluted in distilled water, and the porous ceramic member having a water absorbing amount of 28.0 g/L was immersed therein so that Pt was deposited thereon at a rate of 2 g/L, and this was then heated at 110°C for 2 hours, and heated at 500°C for one hour in a nitrogen atmosphere so that a honeycomb filter having a platinum catalyst deposited on the surface thereof was manufactured.

In the honeycomb filter having the platinum catalyst deposited on the surface thereof, the columnar body except for the plug had an average pore diameter of 10 µm with a porosity of 80%, the plug had a porosity of 24%, and the porosity of the plug was 0.30 times as much as the porosity of the columnar body.

### (Example 27)

The same processes as those of Example 9 were carried out except that a filler paste, which had been prepared by wet-mixing powder of α-type silicon carbide having an average particle size of 10 µm (70% by weight) and powder of β-type silicon carbide having an average particle size of 0.5 µm (30% by weight), and adding, to 100 parts by weight of the resulting mixture, 10 parts by weight of UNILOOP, 15 parts by weight of OX-20, 3 parts by weight of PLYSURF, 8 parts by weight of Binder D and 23 parts by weight of acrylic particles so as to be evenly mixed, was used to manufacture a honeycomb filter.

In the honeycomb filter thus manufactured, the columnar body except for the plug had an average pore diameter of 10 µm with a porosity of 80%, and the plug had a porosity of 75%; thus, the porosity of the plug was 0.94 times as much as the porosity of the columnar body.
(2) The same processes as Example 12 were carried out so that an alumina layer serving as a catalyst supporting film was formed on the surface of a honeycomb filter (columnar body except for a plug, and the plug) at a rate of 1 g/L; thus, a honeycomb filter having a platinum catalyst deposited on the surface thereof was manufactured.

In the honeycomb filter having the platinum catalyst deposited on the surface thereof, the columnar body except for the plug had an average pore diameter of 10 µm with a porosity of 80%, the plug had a porosity of 75%, and the porosity of the plug was 0. 94 times as much as the porosity of the columnar body.

### (Example 28)

(1) The same processes as Example 11 were carried out to manufacture a honeycomb filter, in which: the columnar body except for the plug had an average pore diameter of 10 µm with a porosity of 80%, the plug had a porosity of 90%, and the porosity of the plug was 1.13 times as much as the porosity of the columnar body.
(2) The same processes as Example 12 were carried out so that an alumina layer serving as a catalyst supporting film was formed on the surface of a honeycomb filter (columnar body except for a plug, and the plug) at a rate of 1 g/L; thus, a honeycomb filter having a platinum catalyst deposited on the surface thereof was manufactured.

In the honeycomb filter having the platinum catalyst deposited on the surface thereof, the columnar body except for the plug had an average pore diameter of 10 µm with a porosity of 80%, the plug had a porosity of 90%, and the porosity of the plug was 1.13 times as much as the porosity of the columnar body.

With respect to the honeycomb filters according to Examples 12 to 28 manufactured as described above, the porosity (%) of each of the columnar body and the plug prior to the alumina application, the multiplying ratio of a porosity of the plug to the porosity of the columnar body prior to the alumina application, the amount of alumina application (g/L) of each of the columnar body and the plug, the porosity (%) of each of the columnar body and the plug after the alumina application and the multiplying ratio of a porosity of the plug to the porosity of the columnar body after the alumina application are collectively shown in the following Table 2.

Moreover, with respect to the honeycomb filters according to Examples 12 to 28 that had been fired, it was confirmed whether or not there was any gap between the plug and the partition wall as well as whether or not there was any crack occurring in the plug and a portion of the partition wall contacting the plug.

With respect to the honeycomb filters in which neither a gap nor a crack occurred were subjected to an endurance test in which each of the honeycomb filters was placed in an exhaust gas purifying device as shown in Fig. 6, which was installed in an exhaust passage of an engine, and the engine was driven at the number of revolutions of 3000 min⁻¹ with a torque of 50 Nm for 10 hours so that an exhaust gas purifying process was carried out. After the above-mentioned endurance test, each of the honeycomb filters was taken out and visually observed as to whether or not any cracks occurred.

Moreover, the honeycomb filters that had no cracks after the endurance test were further subjected to heat cycling tests in which the above-mentioned endurance tests were repeatedly carried out, and after having been repeatedly subjected to the endurance tests of 100 times, the resulting filters were further subjected to the endurance tests of 300 times, and each of the honeycomb filters was then taken out and visually observed as to whether or not any cracks occurred.

The results are shown in the following Table 2. The results of Comparative Examples 1 to 6 are also shown in Table 2 by reference.

**Table 2**

| | Porosity (%) prior to alumina application | | Multiplying ratio prior to alumina application (Note 1) | Amount of alumina application (g/L) | | Porosity (%) after alumina application | | Multiplying ratio after alumina application (Note 1) | Existence of cracks and the like (Yes/No) | | | |
|---|---|---|---|---|---|---|---|---|---|---|---|---|
| | | | | | | | | | After firing process | After endurance test | Heat cycling test | |
| | Columnar body | Plug | | Columnar body | Plug | Columnar body | Plug | | | | 100 times | 300 times |
| Example 12 | 20 | 3 | 0.15 | 1 | 1 | 20 | 3 | 0.15 | No | NO | Yes | Yes |
| Example 13 | 20 | 5 | 0.25 | 1 | 1 | 20 | 5 | 0.25 | No | No | No | Yes |
| Example 14 | 20 | 6 | 0.30 | 1 | 1 | 20 | 6 | 0.30 | No | No | No | No |
| Example 15 | 20 | 30 | 1.50 | 1 | 20 | 20 | 24 | 1.20 | No | No | No | No |
| Example 16 | 20 | 30 | 1.50 | 1 | 1 | 20 | 30 | 1.50 | No | No | No | Yes |
| Example 17 | 20 | 80 | 4.00 | 1 | 1 | 20 | 80 | 4.00 | No | No | Yes | Yes |
| Comparative Example 1 | 20 | 2 | 0.10 | - | - | - | - | - | No | Yes | - | - |
| Comparative Example 2 | 20 | 85 | 4.25 | - | - | - | - | - | Yes | - | - | - |
| Example 18 | 50 | 7.5 | 0.15 | 1 | 1 | 50 | 7.5 | 0.15 | No | No | Yes | Yes |
| Example 19 | 50 | 12 | 0.24 | 1 | 1 | 50 | 12 | 0.24 | No | No | No | Yes |
| Example 20 | 50 | 30 | 0.60 | 1 | 20 | 50 | 15 | 0.30 | No | No | No | No |
| Example 21 | 50 | 75 | 1.50 | 1 | 60 | 50 | 60 | 1.20 | No | No | No | No |
| Example 22 | 50 | 75 | 1.50 | 1 | 1 | 50 | 75 | 1.50 | No | No | No | Yes |
| Example 23 | 50 | 90 | 1.80 | 1 | 1 | 50 | 90 | 1.80 | No | No | Yes | Yes |
| Comparative Example 3 | 50 | 5 | 0.10 | - | - | - | - | - | No | Yes | - | - |
| Comparative Example 4 | 50 | 92 | 1.84 | - | - | - | - | - | Yes | - | - | - |
| Example 24 | 80 | 12 | 0.15 | 1 | 1 | 80 | 12 | 0.15 | No | No | Yes | Yes |
| Example 25 | 80 | 20 | 0.25 | 1 | 1 | 80 | 20 | 0.25 | No | No | No | Yes |
| Example 26 | 80 | 30 | 0.38 | 1 | 15 | 80 | 24 | 0.30 | No | No | No | No |
| Example 27 | 80 | 75 | 0.94 | 1 | 1 | 80 | 75 | 0.94 | No | No | No | No |
| Example 28 | 80 | 90 | 1.13 | 1 | 1 | 80 | 90 | 1.13 | No | No | No | No |
| Comparative Example 5 | 80 | 10 | 0.13 | - | - | - | - | - | No | Yes | - | - |
| Comparative Example 6 | 80 | 92 | 1.15 | - | - | - | - | - | Yes | - | - | - |

| | | | | | | | | | | | | |
|---|---|---|---|---|---|---|---|---|---|---|---|---|
| Note 1) Multiplying ratio: Multiplying ratio of porosity of plug to porosity of columnar body | | | | | | | | | | | | |

As shown in Table 2, in any one of the honeycomb filters according to Examples 14, 15, 20 and 21 as well as 26 to 28, no gap was observed between the plug and the partition wall, or no cracks were observed in the plug and a portion of the partition wall contacting the plug, in any of the cases after the firing process, after the endurance test and after heat cycling tests. Moreover, in any one of the honeycomb filters according to Examples 13, 16, 19, 22 and 25, no gap was observed between the plug and the partition wall, or no cracks were observed in the plug and a portion of the partition wall contacting the plug, in any of the cases after the firing process, after the endurance test, and after the repeated endurance tests of 100 times in the heat cycling tests; however, after the repeated endurance tests of 300 times in the heat cycling tests, cracks were observed. Furthermore, in any one of the honeycomb filters according to Examples 12, 17, 18, 23 and 24, no gap was observed between the plug and the partition wall, or no cracks were observed in the plug and a portion of the partition wall contacting the plug, after the firing process as well as after the endurance tests; however, after the repeated endurance tests of 100 times in the heat cycling tests, cracks were observed.

The results of the evaluation tests of the honeycomb filters according to Examples 12 to 28 show that those honeycomb filters in which the columnar body has a porosity in a range from 20 to 80% and the plug has a porosity of 90% or less, with the porosity being 0.15 to 4.0 times as much as the porosity of the columnar body, are free from a gap occurring between the plug and the partition wall as well as occurrence of cracks in the plug and a portion of the partition wall contacting the plug, after the firing process and at the time of heating, even when an alumina layer serving as a catalyst supporting film is formed thereon; however, the results of the evaluation tests of the honeycomb filters according to Examples 12, 13, 16 to 19 as well as 22 to 25 show that those filters in which the porosity of the plug is less than 0.25 times as much as the porosity of the columnar body, or exceeds 1.5 times as much as the porosity of the columnar body tend to cause cracks in the plug and a portion of the partition wall contacting the plug, after a long-term repetitive use.

### INDUSTRIAL APPLICABILITY

The honeycomb filter for purifying exhaust gases in accordance with the present invention, which has the above-mentioned arrangement, is free from a gap occurring between the plug and the partition wall and cracks occurring in the plug and a portion of the partition wall contacting the plug, during the manufacturing process as well as during use; thus, it becomes possible to provide a filter that is superior in durability.

## Claims

1. A honeycomb filter for purifying exhaust gases comprising:
a columnar body made of a plurality of porous ceramic honeycomb members assembled with one another, each of which comprise a number of through holes, said through holes being in parallel with one another along a length direction with a wall portion interposed therebetween;
wherein predetermined through holes of said through holes are filled with plugs at one end of said columnar body, while the through holes that have not been filled with said plugs at said one end are filled with plugs at the other end of said columnar body; and
wherein at least a part of said wall portion functions as a filter for collecting particulates
**characterized in that**
the porosity of said columnar body is in a range from 20 to 80%, and the porosity of said plug is 90% or less and is 0.15 to 4.0 times as much as the porosity of said columnar body.

2. The honeycomb filter according to claim 1,
wherein the porosity of the plug is 0.25 to 1.5 times as much as the porosity of the columnar body.

3. The honeycomb filter for purifying exhaust gases according to claim 1 or 2,
wherein a catalyst is supported thereon.

4. The honeycomb filter for purifying exhaust gases according to any one of claims 1 to 3,
wherein a catalyst supporting film is placed on the surface thereof.

5. A method for removing fine particles from the honeycomb filter having a structure according to any one of claims 1 to 4,
wherein
fine particles that have been collected and accumulated are removed from the honeycomb filter by a back-washing process using a gas flow.

6. A method for removing fine particles from the honeycomb filter having a structure according to any one of claims 1 to 4,
wherein
fine particles that have been collected and accumulated are removed from the honeycomb filter by heating the exhaust gases.

## Patentansprüche

1. Wabenfilter zum Reinigen von Abgasen, umfassend:
einen säulenförmigen Körper, der aus einer Mehrzahl poröser Keramikwabenglieder besteht, die miteinander zusammengesetzt sind, von denen jedes eine Anzahl von Durchgangslöchern umfasst, wobei die Durchgangslöcher entlang einer Längsrichtung mit einem dazwischen angeordneten Wandabschnitt zueinander parallel sind;
wobei vorbestimmte Durchgangslöcher der Durchgangslöcher an einem Ende des säulenförmigen Körpers mit Stopfen gefüllt sind, während die Durchgangslöcher, die an dem einen Ende nicht mit den Stopfen gefüllt wurden, an dem anderen Ende des säulenförmigen Körpers mit Stopfen gefüllt werden; und
wobei wenigstens ein Teil des Wandabschnitts als ein Filter zum Sammeln von Partikeln fungiert,
**dadurch gekennzeichnet, dass**
die Porosität des säulenförmigen Körpers in einem Bereich von 20 bis 80 % ist und die Porosität des Stopfens 90 % oder weniger ist und 0,15 bis 4,0 mal so hoch wie die Porosität des säulenförmigen Körpers ist.

2. Wabenfilter nach Anspruch 1,
wobei die Porosität des Stopfens 0,25 bis 1,5 mal so hoch wie die Porosität des säulenförmigen Körpers ist.

3. Wabenfilter zum Reinigen von Abgasen nach Anspruch 1 oder 2,
wobei ein Katalysator auf diesem getragen ist.

4. Wabenfilter zum Reinigen von Abgasen nach einem der Ansprüche 1 bis 3,
wobei ein katalysatortragender Film auf dessen Oberfläche plaziert ist.

5. Verfahren zum Entfernen von Feinpartikeln aus dem Wabenfilter, der eine Struktur gemäß einem der Ansprüche 1 bis 4 aufweist,
wobei
Feinpartikel, die gesammelt und angehäuft wurden, durch einen Rückspülprozess unter Verwendung eines Gasstroms aus dem Wabenfilter entfernt werden.

6. Verfahren zum Entfernen von Feinpartikeln aus dem Wabenfilter, der eine Struktur gemäß einem der Ansprüche 1 bis 4 aufweist,
wobei
Feinpartikel, die gesammelt und angehäuft wurden, durch Erwärmen der Abgase aus dem Wabenfilter entfernt werden.

## Revendications

1. Filtre en nid d'abeilles pour purifier des gaz d'échappement comprenant :
un corps colonnaire formé d'une pluralité d'éléments en nid d'abeilles céramiques poreux assemblés les uns aux autres, dont chacun comprend un certain nombre de trous traversants, lesdits trous traversants étant parallèles les uns aux autres le long d'une direction de longueur avec une portion de paroi interposée entre eux ;
dans lequel des trous traversants prédéterminés parmi lesdits trous traversants sont remplis avec des bouchons au niveau d'une extrémité dudit corps colonnaire, tandis que les trous traversants qui n'ont pas été remplis avec lesdits bouchons au niveau de ladite extrémité sont remplis avec des bouchons au niveau de l'autre extrémité dudit corps colonnaire ; et
dans lequel au moins une partie de ladite portion de paroi sert de filtre destiné à collecter des particules
**caractérisé en ce que**
la porosité dudit corps colonnaire se situe dans une plage allant de 20 à 80 %, et la porosité dudit bouchon est de 90 % ou moins et représente 0,15 à 4,0 fois la porosité dudit corps colonnaire.

2. Filtre en nid d'abeilles selon la revendication 1, dans lequel la porosité du bouchon représente 0,25 à 1,5 fois la porosité du corps colonnaire.

3. Filtre en nid d'abeilles pour purifier des gaz d'échappement selon la revendication 1 ou 2, dans lequel un catalyseur est supporté dessus.

4. Filtre en nid d'abeilles pour purifier des gaz d'échappement selon l'une quelconque des revendications 1 à 3, dans lequel un film supportant un catalyseur est placé sur la surface de celui-ci.

5. Procédé pour éliminer les fines particules du filtre en nid d'abeilles ayant une structure selon l'une quelconque des revendications 1 à 4, dans lequel les fines particules qui ont été collectées et accumulées sont éliminées du filtre en nid d'abeilles par un procédé de lavage à contre-courant utilisant un flux de gaz.

6. Procédé pour éliminer les fines particules du filtre en nid d'abeilles ayant une structure selon l'une quelconque des revendications 1 à 4, dans lequel les fines particules qui ont été collectées et accumulées sont éliminées du filtre en nid d'abeilles en chauffant les gaz d'échappement.
